(19) Europäisches Patentamt
European Patent Office
Office européen des brevets

(11) **EP 4 783 576 A1**

(12) **EUROPEAN PATENT APPLICATION**
published in accordance with Art. 153(4) EPC

(43) Date of publication:
**29.07.2026 Bulletin 2026/31**

(21) Application number: **24881262.0**

(22) Date of filing: **02.09.2024**

(51) International Patent Classification (IPC):
**H04N 19/13** (2014.01)

(52) Cooperative Patent Classification (CPC):
**H04N 19/13; H04N 19/132; H04N 19/146; H04N 19/154; H04N 19/169; H04N 19/42; H04N 19/44**

(86) International application number:
**PCT/CN2024/116309**

(87) International publication number:
**WO 2025/086895 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.10.2023 CN 202311377186**

(71) Applicant: **HUAWEI TECHNOLOGIES CO., LTD.**
**Shenzhen 518129 (CN)**

(72) Inventors:
• **KANG, Ning**
**Shenzhen, Guangdong 518129 (CN)**

• **ZHANG, Shifeng**
**Shenzhen, Guangdong 518129 (CN)**
• **HU, Ting**
**Shenzhen, Guangdong 518129 (CN)**
• **MAO, Jue**
**Shenzhen, Guangdong 518129 (CN)**
• **ZHAO, Yin**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **ENTROPY CODING/DECODING METHOD AND DEVICE**

(57) This application provides an entropy encoding/decoding method and apparatus, and relates to the field of artificial intelligence (AI)-based picture or audio encoding/decoding technologies. The entropy encoding method includes: obtaining a plurality of symbols of a to-be-processed object; grouping the plurality of symbols, where a quantity of symbols in each group is N, and $1<N$; obtaining M symbols from a current group, where $1 \leq M \leq N$; and encoding the M symbols to obtain a bitstream. This application can reduce a quantity of memory reads/writes and improve coding efficiency.

600

| Obtain a plurality of symbols of a to-be-processed object | 601 |
| Group the plurality of symbols, where a quantity of symbols in each group is N | 602 |
| Obtain M symbols from a current group | 603 |
| Encode the M symbols to obtain a bitstream | 604 |

FIG. 6

**Description**

**TECHNICAL FIELD**

This application relates to an artificial intelligence (artificial intelligence, AI)-based video or picture compression technology, and in particular, to an entropy encoding/decoding method and apparatus.

**BACKGROUND**

Video coding (video encoding and decoding) is used in a wide range of digital video applications, for example, broadcast digital televisions, video communication over the internet and mobile networks, real-time conversational applications such as video chat and video conferencing, digital versatile discs (Digital Versatile Discs, DVDs) and Blu-ray discs, video content acquisition and editing systems, and security applications of camcorders.

An amount of video data needed to depict even a relatively short video can be substantial, which may result in difficulties when the data is to be streamed or otherwise communicated across a network with limited bandwidth capacity. Thus, video data is generally compressed before being communicated across modern day telecommunications networks. Due to limited memory resources, a size of a video may also be an issue when the video is stored on a storage device. Video compression devices often use software and/or hardware at source sides to code video data prior to transmission or storage, thereby decreasing amounts of data needed to represent digital video pictures. The compressed data is then received at destination sides by video decompression devices. With limited network resources and increasing demands for higher video quality, improved compression and decompression techniques that can improve a compression ratio with little to no sacrifice in picture quality are desirable.

In recent years, deep learning is gaining popularity in the fields of audio, video, or picture encoding and decoding. For example, Google has organized the Challenge on Learned Image Compression (Challenge on Learned Image Compression, CLIC) at the Conference on Computer Vision and Pattern Recognition of the Institute of Electrical and Electronics Engineers (Institute of Electrical and Electronics Engineers, IEEE) (IEEE Conference on Computer Vision and Pattern Recognition, CVPR) for several consecutive years. The CLIC focuses on improving picture compression efficiency through deep neural networks. According to performance evaluation of a scheme of the CLIC, an existing picture coding scheme based on a deep learning technology has comprehensive compression efficiency comparable to a latest generation of the video picture coding standard of Versatile Video Coding (Versatile Video Coding, VVC), and has a unique advantage in improving user-perceived quality.

In a related technology, when an image feature is coded as information, related information before and after encoding/decoding is stored in a memory, leading to time-consuming memory read/write operations, and reducing encoding/decoding efficiency.

**SUMMARY**

This application provides an entropy encoding/decoding method and apparatus, to reduce a quantity of memory reads/writes and improve coding efficiency.

According to a first aspect, this application provides an entropy encoding method, including: obtaining a plurality of symbols of a to-be-processed object; grouping the plurality of symbols, where a quantity of symbols in each group is N, and $1<N$; obtaining M symbols from a current group, where $1 \leq M \leq N$; and encoding the M symbols to obtain a bitstream.

In this embodiment, N symbols in each group (obtained by grouping the symbols of the to-be-processed object) are encoded (including in a first encoding manner and a second encoding manner), to reduce a quantity of memory reads/writes and improve coding efficiency.

In this application, the to-be-processed object may include several forms:

(1) a file type or a storage standard, for example, an image, a video, and an audio;
(2) a data transmission protocol, for example, an online video, live streaming, and device-cloud collaborative content; and
(3) a compression software or storage device, for example, audio/video compression software.

It should be noted that, in addition to the foregoing forms, the to-be-processed object in this application may further include another form. A common point of the forms is that an entropy encoding/decoding technology is related thereto. Therefore, the to-be-processed object is not specifically limited in this application.

The to-be-processed object may include symbols. For example, a video includes a frame sequence, and each frame includes a plurality of pixels. In this case, a symbol of the video may be a pixel. For another example, a plain text file includes a plurality of characters (which may be Chinese characters, letters, numerals, or the like). In this case, a symbol of the plain text file may be a character. A symbol is a basic unit of information (to-be-encoded/decoded data).

The to-be-processed object may include many symbols. If these symbols are encoded together, related data can only be stored in and read from a memory during encoding due to limited space of a register. However, a plurality of memory reads/writes on the memory increase time consumption. Therefore, to reduce the time consumption and improve the coding efficiency, these symbols may be grouped, so that a quantity of symbols in one group is reduced, and a subsequent step is performed in group.

In this application, one group includes N symbols, where N is an integer greater than 1. For example, N=2, 4, 5, or 8. Every N symbols in these symbols may be sequentially grouped into one group based on indexes of the symbols. If the bitstream is first-in-first-out, grouping may be performed on the symbols in ascending order of indexes. If the bitstream is first-in-last-out, grouping may be performed on the symbols in descending order of indexes. Optionally, all symbols may be obtained at a time and then grouped, or one or more symbols may be grouped into one group once being obtained. This is not specifically limited in this application.

The current group may be a group that is currently under processing by an encoder side during encoding, that is, a group that is currently being processed by the encoder side. In a period from a $1^{st}$ symbol of a group to an $N^{th}$ symbol of the group, the group may be referred to as the current group. According to descriptions in step 602, the current group includes N symbols.

In a possible implementation, the M symbols are symbols on which a coding operation is not skipped in N symbols in the current group.

In view of this, the M symbols may include the following several cases:

(1) $1 \leq M < N$, indicating that a coding operation is not skipped on a part (one or more) of the symbols in the current group. Therefore, the M symbols are the part (one or more) of the symbols in the current group. Correspondingly, a coding operation is skipped on N-M symbols other than the M symbols in the current group.

(2) M=N, indicating that a coding operation is not skipped on every (N) of the symbols in the current group. Therefore, the M symbols are all the symbols in the current group. Correspondingly, a coding operation is skipped on none of the symbols in the current group.

(3) M=0, indicating that a coding operation is skipped on all (N) of the symbols in the current group. Therefore, there is no M symbol, and in this case, encoding on the current group ends, and there is no need to perform steps 603 and 604.

Optionally, the encoder side may determine, based on a prerequisite (that is, data that is known during encoding/decoding, for example, a syntax element), whether a coding operation is skipped on each of the N symbols in the current group. This is a symbol-level operation.

A first symbol may be a symbol that meets a preset condition and that is in the plurality of symbols of the to-be-processed object. The preset condition may include a low probability and a large quantity. For example, if a probability of a symbol is lower than a probability threshold, and a proportion of such symbols in all symbols is greater than a proportion threshold, the symbol may be determined as the first symbol. The probability may be a probability that a value of the symbol is a specific value (for example, 0 or 1). For details, refer to the technical descriptions of entropy encoding.

The bitstream includes two cases: first-in-last-out and first-in-first-out. A decoder side usually performs decoding in a first decoding manner before decoding in a second decoding manner. Therefore, to ensure correct decoding by the decoder side, the encoder side may determine an encoding order in the two cases of the bitstream. To be specific, in the first-in-first-out case, the encoder side first performs encoding in the first encoding manner and then performs encoding in the second encoding manner; or in the first-in-last-out case, the encoder side first performs encoding in the second encoding manner and then first performs encoding in the first encoding manner. Optionally, the foregoing first encoding may be INBOUND encoding described above, and the foregoing second encoding may be OUTBOUND encoding described above. It should be noted that an encoder for the first symbol in OUTBOUND encoding is not specifically limited, and an encoder for a second symbol (a symbol that does not meet the preset condition in the plurality of symbols of the to-be-processed object) and/or the preset value in INBOUND encoding is not specifically limited. The encoders for the two symbols may be the same or different.

In a possible implementation, the M symbols include one or more first symbols that meet a preset condition, and in this case, the first symbol in the M symbols is replaced with a preset value to obtain M processed symbols; the M processed symbols are encoded in a first encoding manner to obtain a first bitstream; the one or more first symbols are encoded in a second encoding manner to obtain a second bitstream; and the bitstream is formed based on the first bitstream and the second bitstream.

This case corresponds to the first-in-first-out bitstream. The first symbol in the M symbols may be first replaced with the preset value (for example, 2) to obtain the M processed symbols. In this way, a second symbol in the M processed symbols still retains an original value, and the first symbol becomes the preset value. If there are a plurality of first symbols in the M symbols, the encoder side may replace all the plurality of first symbols with the preset value.

Then, the M processed symbols are encoded in the first encoding manner to obtain the first bitstream. The encoder side may encode the M processed symbols together in the first encoding manner, so that the first bitstream can be written into a register at a time, thereby avoiding a waste of space of the register. If the space of the register is insufficient, the first bitstream is flushed (flush).

Then, the first symbol is encoded in the second encoding manner to obtain the second bitstream. If there are the plurality of first symbols in the M symbols, the encoder side may encode the plurality of first symbols together in the second encoding manner. In this way, the second bitstream may be written into a register at a time, thereby avoiding a waste of space of the register. If the space of the register is insufficient, the second bitstream is flushed (flush).

In a possible implementation, the M symbols include one or more first symbols that meet a preset condition, and in this case, the one or more first symbols are encoded in a second encoding manner to obtain a third bitstream; the first symbol in the M symbols is replaced with a preset value to obtain M processed symbols; the M processed symbols are encoded in a first encoding manner to obtain a fourth bitstream; and the bitstream is formed based on the third bitstream and the fourth bitstream.

This case corresponds to the first-in-last-out bitstream. The first symbol in the M symbols may be first encoded in the second encoding manner to obtain the third bitstream. If there are the plurality of first symbols in the M symbols, the encoder side may encode the plurality of first symbols together in the second encoding manner. In this way, the third bitstream may be written into a register at a time, thereby avoiding a waste of space of the register. If the space of the register is insufficient, the third bitstream is flushed (flush).

Then, the first symbol is first replaced with the preset value (for example, 2) to obtain the M processed symbols. In this way, a second symbol in the M processed symbols still retains an original value, and the first symbol becomes the preset value.

Then, the M processed symbols are encoded in the first encoding manner to obtain the fourth bitstream. The encoder side may encode the M processed symbols together in the first encoding manner, so that the fourth bitstream can be written into a register at a time, thereby avoiding a waste of space of the register. If the space of the register is insufficient, the first bitstream is flushed (flush).

For example, a maximum of 17 bits of a bitstream can be written into a register through first encoding, and a maximum of 8 bits of bitstream can be written into the register through second encoding. If the register is 32-bit, a flush is required after each character is encoded. If the register is 64-bit, a flush is required after every two characters are encoded. Time consumption increases as a quantity of memory read operations increases. When N=4, if the register is 32-bit, first encoding and second encoding are performed on four symbols together. This is equivalent to that only one flush is required every fourth time second encoding is performed, and one flush is required every time first encoding is performed. When a probability of the first symbol is low (for example, lower than 1%), an average quantity of flushes for every four symbols is 1.04, which is significantly less than the foregoing four flushes, and a quantity of memory operations is significantly reduced.

In addition, when the M symbols do not include the first symbol, the M symbols are encoded in a first encoding manner to obtain the bitstream. That is, as the M symbols do not include the first symbol, the first symbol does not need to be replaced with the preset value, and the M symbols can be directly encoded in the first encoding manner.

According to a second aspect, this application provides an entropy decoding method, including: obtaining a bitstream, where the bitstream corresponds to a plurality of symbols of a to-be-reconstructed object, the plurality of symbols are divided into a plurality of groups, each group includes N symbols, M symbols on which a coding operation is not skipped and D symbols on which a coding operation is skipped exist in the N symbols, $1<N$, $1 \leq M \leq N$, and $M+D=N$; decoding the bitstream to obtain the M symbols; and setting the D symbols to a first preset value.

In this embodiment, a bitstream of N symbols in each group (obtained by grouping the symbols of the to-be-processed object) are decoded (including in a first decoding manner and a second decoding manner), to reduce a quantity of memory reads/writes and improve coding efficiency.

A decoder side may receive all bitstreams before decoding, or may decode bitstreams while receiving bitstreams. This is not specifically limited. The decoder side can learn, based on a prerequisite in a bitstream (that is, data that is known during encoding/decoding, for example, a syntax element), how many bits of the bitstream correspond to one symbol. Therefore, the decoder side can obtain a bitstream corresponding to N symbols for subsequent processing.

Corresponding to an encoder side, the decoder side may also have a concept of group. One group includes N symbols, where N is an integer greater than 1. For example, N=2, 4, 5, or 8.

The decoder side may determine, based on a prerequisite (that is, data that is known during encoding/decoding, for example, a syntax element), on which symbols in N symbols in a current group a coding operation is skipped, and on which symbols a coding operation is not skipped. This is a symbol-level operation. The decoder side determines, based on the foregoing operation, that M symbols on which a coding operation is not skipped and D symbols on which a coding operation is skipped exist in the N symbols in the current group, where $1 \leq M \leq N$, and $M+D=N$.

In this application, the bitstream may be decoded in the first decoding manner to obtain M unprocessed symbols; when the M unprocessed symbols include M' second preset values, the bitstream is decoded in the second decoding manner to obtain M' symbols (corresponding to first symbols and meeting a preset condition), where $1 \leq M' \leq M$; the M'

second preset values in the M unprocessed symbols are replaced with the M' symbols to obtain M processed symbols (including the first symbols and second symbols (not meeting the preset condition)); the M processed symbols are used as the M symbols; or when the M unprocessed symbols do not include M' second preset values, the M unprocessed symbols are used as the M symbols.

Optionally, the first decoding manner may be INBOUND decoding described above, and the second decoding manner may be OUTBOUND decoding described above. It should be noted that a decoder for the bitstream in OUTBOUND decoding is not specifically limited, and a decoder for the bitstream in INBOUND decoding is not specifically limited. The two decoders may be the same or different.

The preset condition may include a low probability and a large quantity. For example, a probability of a symbol is lower than a probability threshold, and a proportion of such symbols in all symbols exceeds a proportion threshold.

The decoder side decodes the bitstream in the first decoding manner to obtain the M unprocessed symbols. The M unprocessed symbols may include only the second symbols. In this case, the M unprocessed symbols are the M symbols, step 703 may end, and the following step 704 is performed. The decoder side may decode a bitstream of the M unprocessed symbols together in the first decoding manner, so that the bitstream can be written into a register at a time, thereby avoiding a waste of space of the register. If the space of the register is insufficient, the bitstream is flushed (flush).

The M unprocessed symbols may also include the second symbols and the M' second preset values. In this case, the decoder side further decodes the bitstream in the second decoding manner to obtain the M' symbols. The M' symbols are original values of first symbols in original M symbols. The decoder side may replace the M' second preset values with the M' symbols, to obtain the M symbols. The decoder side may decode a bitstream of the M' symbols together in the second decoding manner, so that the bitstream can be written into a register at a time, thereby avoiding a waste of space of the register. If the space of the register is insufficient, the bitstream is flushed (flush).

For values of M and D, the following cases may be included:

(1) M=N, and D=0, indicating that a coding operation is skipped on none of the N symbols. Therefore, all the M (namely, N) symbols can be obtained based on the bitstream, and step 704 is not performed in this case.

(2) 1≤M<N, and D>0, indicating that a coding operation is not skipped on a part of the N symbols, and a coding operation is skipped on the other part of the N symbols. Therefore, the M symbols can be obtained based on the bitstream, and the remaining D symbols may be obtained by performing step 704.

(3) M=0, and D=N, indicating that a coding operation is skipped on all the N symbols, and the N symbols do not need to be obtained based on the bitstream. In this case, step 703 is skipped, and step 704 is directly performed.

In view of this, D>0, indicating that the current group includes a symbol (namely, the D symbols) on which a coding operation is skipped. Therefore, the D symbols can be set to the first preset value (for example, 0 or -1) to reconstruct all the symbols in the current group.

According to a third aspect, this application provides an entropy encoding apparatus, including: an obtaining module, configured to obtain a plurality of symbols of a to-be-processed object; a grouping module, configured to group the plurality of symbols, where a quantity of symbols in each group is N, and 1<N; a skipping module, configured to obtain M symbols from a current group, where 1≤M≤N; and an encoding module, configured to encode the M symbols to obtain a bitstream.

In a possible implementation, the M symbols include one or more first symbols that meet a preset condition, and the encoding module is specifically configured to: replace the first symbol in the M symbols with a preset value to obtain M processed symbols; encode the M processed symbols in a first encoding manner to obtain a first bitstream; encode the one or more first symbols in a second encoding manner to obtain a second bitstream; and form the bitstream based on the first bitstream and the second bitstream.

In a possible implementation, the M symbols include one or more first symbols that meet a preset condition, and the encoding module is specifically configured to: encode the one or more first symbols in a second encoding manner to obtain a third bitstream; replace the first symbol in the M symbols with a preset value to obtain M processed symbols; encode the M processed symbols in a first encoding manner to obtain a fourth bitstream; and form the bitstream based on the third bitstream and the fourth bitstream.

In a possible implementation, the M symbols do not include a first symbol that meets a preset condition, and the encoding module is specifically configured to encode the M symbols in a first encoding manner to obtain the bitstream.

In a possible implementation, the preset condition includes that a probability of the first symbol is lower than a probability threshold, and a proportion of the first symbols in the plurality of symbols exceeds a proportion threshold.

In a possible implementation, the M symbols are symbols on which a coding operation is not skipped in N symbols in the current group.

In a possible implementation, N=4.

According to a fourth aspect, this application provides an entropy decoding apparatus, including: an obtaining module, configured to obtain a bitstream, where the bitstream corresponds to a plurality of symbols of a to-be-reconstructed object, the plurality of symbols are divided into a plurality of groups, each group includes N symbols, M symbols on which a coding operation is not skipped and D symbols on which a coding operation is skipped exist in the N symbols, $1<N$, $1\leq M\leq N$, and $M+D=N$; a decoding module, configured to decode the bitstream to obtain the M symbols; and a setting module, configured to set the D symbols to a first preset value.

In a possible implementation, the decoding module is specifically configured to: decode the bitstream in a first decoding manner to obtain M unprocessed symbols; when the M unprocessed symbols include M' second preset values, decode the bitstream in a second decoding manner to obtain M' symbols, where $1\leq M'\leq M$; replace the M' second preset values in the M unprocessed symbols with the M' symbols to obtain M processed symbols; and use the M processed symbols as the M symbols; or when the M unprocessed symbols do not include M' second preset values, use the M unprocessed symbols as the M symbols.

In a possible implementation, N=4.

According to a fifth aspect, this application provides an encoder, including a processing circuit, configured to perform the method according to any one of claims 1 to 7.

According to a sixth aspect, this application provides a decoder, including a processing circuit, configured to perform the method according to any one of claims 8 to 10.

According to a seventh aspect, this application provides a computer program product. The computer program product includes computer program code. When the computer program code is run on a computer, the computer is enabled to perform the method according to any one of claims 1 to 10.

According to an eighth aspect, this application provides a non-transitory computer-readable storage medium, including a bitstream obtained by using the entropy encoding method according to any one of claims 1 to 7.

According to a ninth aspect, this application provides an encoder, including one or more processors; and a non-transitory computer-readable storage medium, coupled to the processor and storing a program determined by the processor, where when the program is determined by the processor, the encoder is enabled to perform the method according to any one of claims 1 to 7.

According to a tenth aspect, this application provides a decoder, including: one or more processors; and a non-transitory computer-readable storage medium, coupled to the processor and storing a program determined by the processor, where when the program is determined by the processor, the decoder is enabled to perform the method according to any one of claims 8 to 10.

According to an eleventh aspect, this application provides a picture or audio processor, including a processing circuit, configured to perform the method according to any one of claims 1 to 10.

## BRIEF DESCRIPTION OF DRAWINGS

FIG. 1a is an example block diagram of a coding system 10 according to an embodiment of this application;
FIG. 1b is an example block diagram of a video coding system 40 according to an embodiment of this application;
FIG. 2 is an example block diagram of a video encoder 20 according to an embodiment of this application;
FIG. 3 is an example block diagram of a video decoder 30 according to an embodiment of this application;
FIG. 4 is an example block diagram of a video coding device 400 according to an embodiment of this application;
FIG. 5 is an example block diagram of an apparatus 500 according to an embodiment of this application;
FIG. 6 is a flowchart of a process 600 of an entropy encoding method according to an embodiment of this application;
FIG. 7 is a flowchart of a process 700 of an entropy decoding method according to an embodiment of this application;
FIG. 8 is a flowchart after integration of coding operation skipping and encoding according to this application;
FIG. 9 is a flowchart after integration of coding operation skipping and decoding according to this application;
FIG. 10 is a diagram of a structure of an entropy encoding apparatus 1000 according to this application; and
FIG. 11 is a diagram of a structure of an entropy decoding apparatus 1100 according to this application.

## DESCRIPTION OF EMBODIMENTS

To make objectives, technical solutions, and advantages of this application clearer, the following clearly and completely describes the technical solutions in this application with reference to accompanying drawings in this application. It is clear that the described embodiments are a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

It should be understood that in this application, "at least one piece (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Video coding typically refers to processing of a sequence of pictures, where the sequence of pictures forms a video or a video sequence. In the field of video coding, the terms "picture (picture)", "frame (frame)", and "image (image)" may be used as synonyms. Video coding (or coding in general) includes two parts video encoding and video decoding. Video encoding is performed at a source side, and typically includes processing (for example, by compression) raw video pictures to reduce the amount of data required for representing the video pictures (for more efficient storage and/or transmission). Video decoding is performed at a destination side, and typically includes inverse processing relative to processing of an encoder to reconstruct the video pictures. "Coding" of a video picture (or a picture in general) in embodiments should be understood to as "encoding" or "decoding" of a video picture or a video sequence. A combination of an encoding part and a decoding part is also referred to as a codec (encoding and decoding, CODEC).

In a case of lossless video coding, a raw video picture can be reconstructed. In other words, a reconstructed video picture has same quality as the raw video picture (it is assumed that no transmission loss or other data loss occurs during storage or transmission). In a case of lossy video coding, further compression is performed through, for example, quantization, to reduce an amount of data required for representing a video picture, and the video picture cannot be completely reconstructed at a decoder side. In other words, quality of a reconstructed video picture is lower or poorer than that of the raw video picture.

Several video coding standards are used for "lossy hybrid video encoding and decoding" (that is, spatial prediction and temporal prediction in a pixel domain are combined with 2D transform coding for applying quantization in a transform domain). Each picture of a video sequence is typically partitioned into a set of non-overlapping blocks, and coding is typically performed at a block level. To be specific, at an encoder side, a video is usually processed, that is, encoded, at a block (video block) level. For example, a prediction block is generated through spatial (intra) prediction and temporal (inter) prediction, the prediction block is subtracted from a current block (block being processed or to be processed) to obtain a residual block, and the residual block is transformed in the transform domain and quantized to reduce an amount of data that is to be transmitted (compressed). At a decoder side, an inverse processing part relative to the encoder is applied to an encoded block or a compressed block to reconstruct the current block for representation. Furthermore, the encoder duplicates the decoder processing loop such that both the encoder and the decoder generate identical predictions (for example, intra and inter predictions) and/or reconstructed pixels for processing, that is, coding, the subsequent blocks.

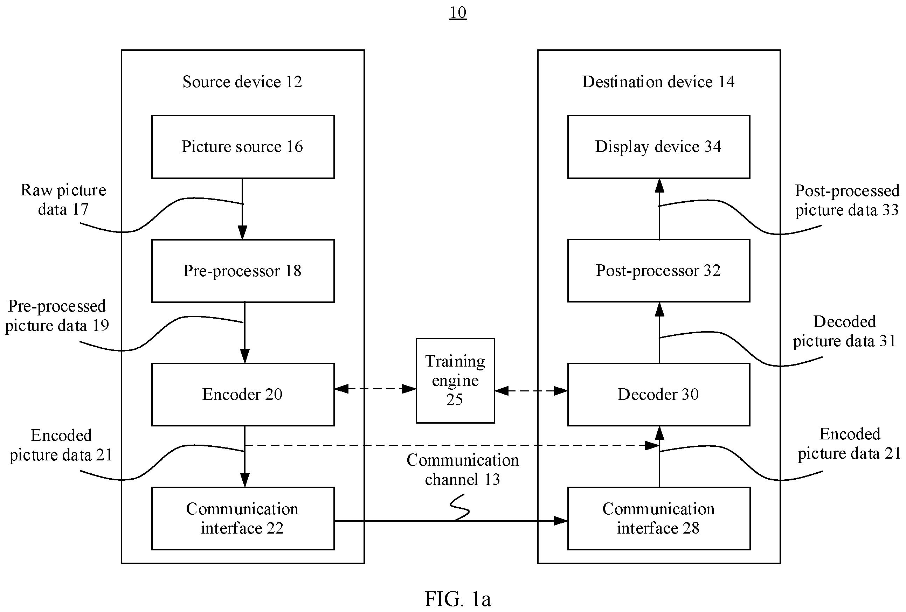

In the following embodiments of a coding system 10, an encoder 20 and a decoder 30 are described based on FIG. 1a to FIG. 3.

FIG. 1a is an example block diagram of a coding system 10 according to an embodiment of this application, for example, a video coding system 10 (or a coding system 10 for short) that may utilize a technology of this application. A video encoder 20 (or an encoder 20 for short) and a video decoder 30 (or a decoder 30 for short) of the video coding system 10 represent examples of devices that may be configured to perform techniques in accordance with various examples described in this application.

As shown in FIG. 1a, the coding system 10 includes a source device 12 configured to provide encoded picture data 21 such as an encoded picture to a destination device 14 for decoding the encoded picture data 21.

The source device 12 includes the encoder 20, and may additionally, that is, optionally, include a picture source 16, a pre-processor (or a pre-processing unit) 18, for example, a picture pre-processor, and a communication interface (or a communication unit) 22.

The picture source 16 may include or be any kind of picture capturing device, for example, for capturing a real-world picture, and/or any type of a picture generating device, for example, a computer graphics processing unit for generating a computer animated picture, or any type of other device for obtaining and/or providing a real-world picture, a computer generated picture (for example, a screen content, a virtual reality (virtual reality, VR) picture) and/or any combination thereof (for example, an augmented reality (augmented reality, AR) picture). The picture source may be any type of memory or storage storing any of the aforementioned pictures.

In order to distinguish processing performed by the pre-processor (or pre-processing unit) 18, a picture (or picture data) 17 may also be referred to as a raw picture (or raw picture data) 17.

The pre-processor 18 is configured to receive the raw picture data 17, and pre-process the raw picture data 17, to obtain a pre-processed picture (or pre-processed picture data) 19. Pre-processing performed by the pre-processor 18 may, for example, include trimming, color format conversion (for example, from RGB to YCbCr), color correction, or denoising. It may be understood that the pre-processing unit 18 may be an optional component.

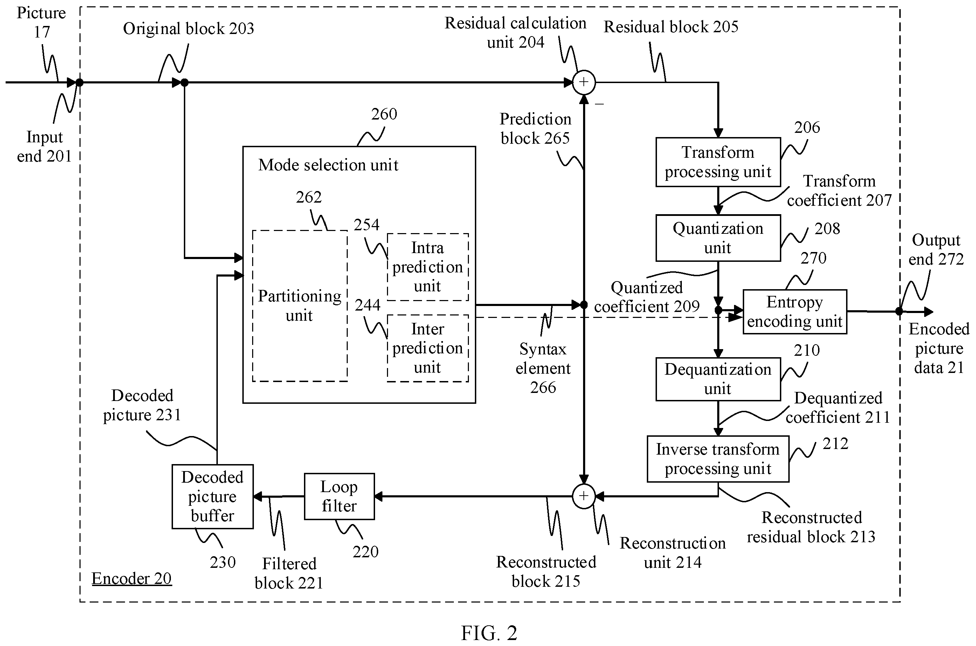

The video encoder (or the encoder) 20 is configured to receive the pre-processed picture data 19 and provide the encoded picture data 21 (further details are described below, for example, based on FIG. 2).

The communication interface 22 of the source device 12 may be configured to receive the encoded picture data 21 and to transmit the encoded picture data 21 (or any further processed version thereof) over a communication channel 13 to another device, for example, the destination device 14 or any other device, for storage or direct reconstruction.

The destination device 14 includes the decoder 30, and may additionally, that is, optionally, include a communication interface (or a communication unit) 28, a post-processor (or a post-processing unit) 32 and a display device 34.

The communication interface 28 of the destination device 14 is configured to receive the encoded picture data 21 (or any further processed version thereof), for example, directly from the source device 12 or from any other source device, for example, a storage device, for example, an encoded picture data storage device, and provide the encoded picture data 21 to the decoder 30.

The communication interface 22 and the communication interface 28 may be configured to transmit or receive the encoded picture data (or encoded data) 21 via a direct communication link between the source device 12 and the destination device 14, for example, a direct wired or wireless connection, or via any kind of network, for example, a wired or wireless network or any combination thereof, or any kind of private and public network, or any kind of combination thereof.

The communication interface 22 may be, for example, configured to package the encoded picture data 21 into an appropriate format, for example, packets, and/or process the encoded picture data through any kind of transmission encoding or processing for transmission over a communication link or communication network.

The communication interface 28, forming the counterpart of the communication interface 22, may be, for example, configured to receive the transmitted data and process the transmitted data through any type of corresponding transmission decoding or processing and/or de-packaging to obtain the encoded picture data 21.

The communication interface 22 and the communication interface 28 each may be configured as a unidirectional communication interface indicated by an arrow of the communication channel 13 pointing from the source device 12 to the destination device 14 in FIG. 1a, or a bidirectional communication interface; and may be configured to transmit and receive a message and the like, to establish a connection, confirm and exchange any other information related to the communication link and/or data transmission such as transmission of the encoded picture data.

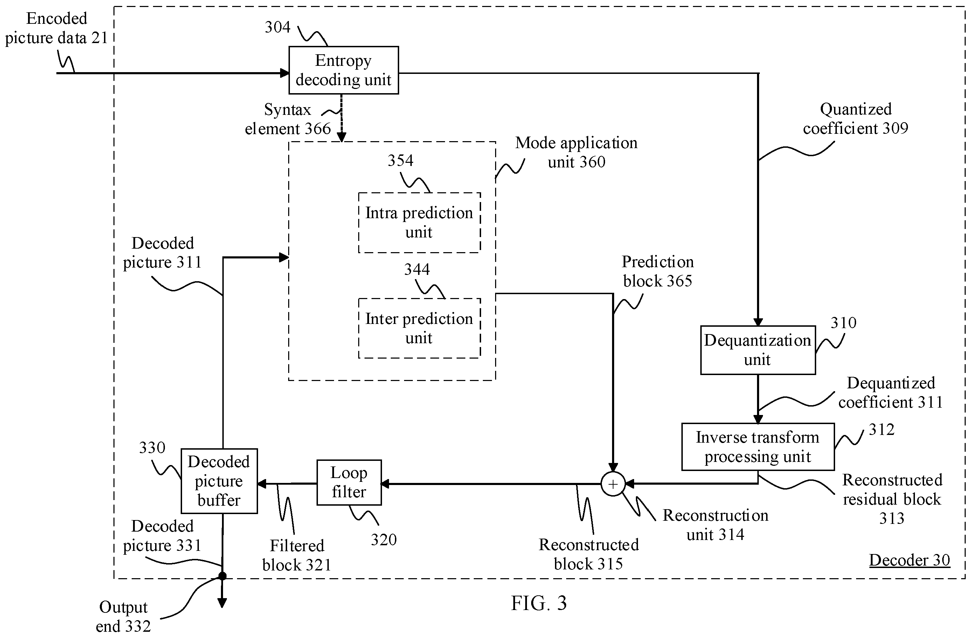

The video decoder (or the decoder) 30 is configured to receive the encoded picture data 21 and provide decoded picture data (or decoded picture data) 31 (further details will be described below, for example, based on FIG. 3).

The post-processor 32 is configured to post-process the decoded picture data 31 (also referred to as reconstructed picture data), for example, a decoded picture, to obtain post-processed picture data 33, for example, a post-processed picture. Post-processing performed by the post-processing unit 32 may include, for example, color format conversion (for example, from YCbCr to RGB), color correction, trimming, or re-sampling, or any other processing, for example, for generating the decoded picture data 31 for display, for example, by the display device 34.

The display device 34 is configured to receive the post-processed picture data 33 for displaying the picture, for example, to a user or viewer. The display device 34 may be or include any type of display for representing the reconstructed picture, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS), a digital light processor (digital light processor, DLP), or any type of other display.

The coding system 10 further includes a training engine 25. The training engine 25 is configured to train the encoder 20 or the decoder 30, to process a picture, a picture area, or a picture block. In this embodiment of this application, training data may be stored in a database (not shown), and the training engine 25 performs training based on the training data to obtain a target model. It should be noted that a source of the training data is not limited in this embodiment of this application. For example, the training data may be obtained from a cloud or another place to perform model training.

The target model obtained through training by the training engine 25 may be applied to the coding system 10, for example, applied to the source device 12 (for example, the encoder 20) or the destination device 14 (for example, the decoder 30) shown in FIG. 1a. The training engine 25 may obtain the target model through training on the cloud, and the coding system 10 downloads the target model from the cloud and uses the target model. Alternatively, the training engine 25 may obtain the target model through training on the cloud and use the target model, and the coding system 10 directly obtains a processing result from the cloud.

Although FIG. 1a shows the source device 12 and the destination device 14 as separate devices, a device embodiment may alternatively include both the source device 12 and the destination device 14 or functions of both the source device 12 and the destination device 14, namely, the source device 12 or corresponding functions and the destination device 14 or corresponding functions. In such embodiments, the source device 12 or corresponding functions and the destination device 14 or corresponding functions may be implemented using the same hardware and/or software or by separate hardware and/or software or any combination thereof.

As will be apparent for a skilled person based on the description, the existence and (exact) division into the different units or functions in the source device 12 and/or the destination device 14 as shown in FIG. 1a may vary depending on an actual device and application.

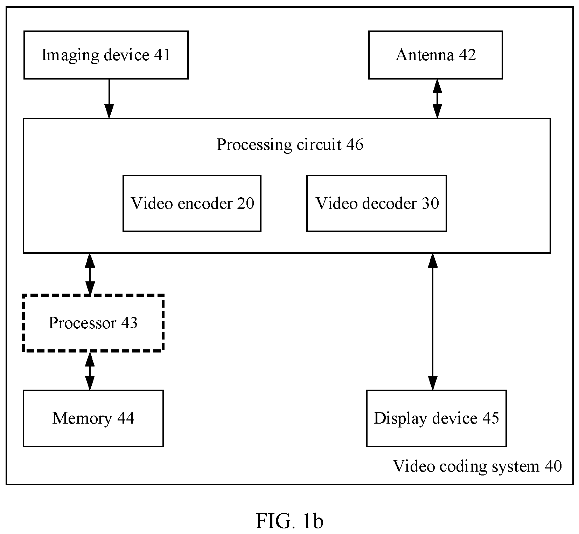

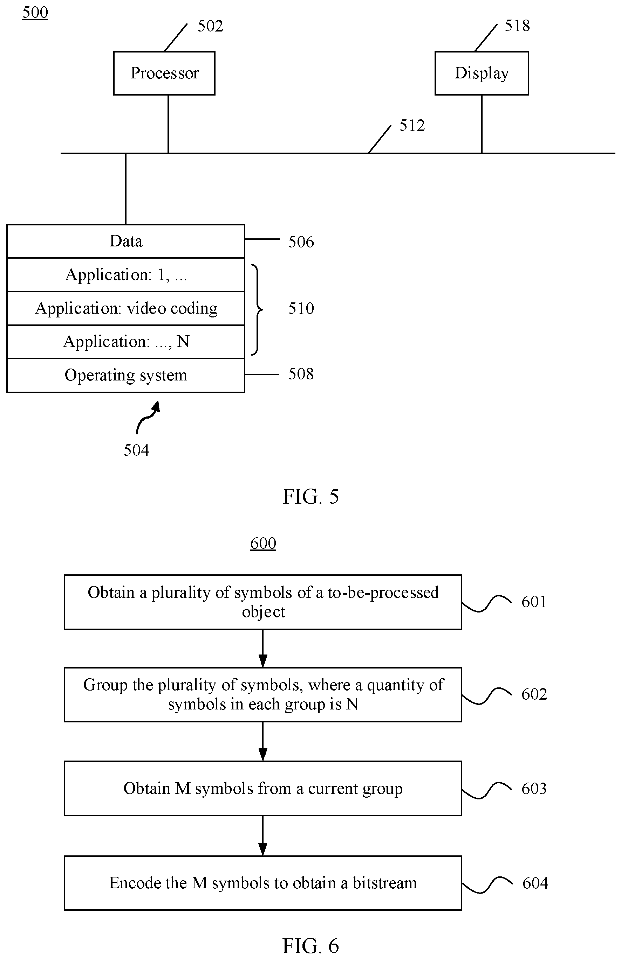

The encoder 20 (for example, the video encoder 20) or the decoder 30 (for example, the video decoder 30) or both the encoder 20 and the decoder 30 may be implemented via a processing circuit as shown in FIG. 1b, such as one or more microprocessors, digital signal processors (digital signal processors, DSPs), application-specific integrated circuits (application-specific integrated circuits, ASICs), field-programmable gate arrays (field-programmable gate arrays, FPGAs), discrete logic, hardware, video coding dedicated processors, or any combinations thereof. The encoder 20 may be implemented via a processing circuit 46 to include the various modules as discussed with respect to the encoder 20 of FIG. 2 and/or any other encoder system or subsystem described herein. The decoder 30 may be implemented via the processing circuit 46 to include the various modules as discussed with respect to the decoder 30 of FIG. 3 and/or any other decoder system or subsystem described herein. The processing circuit 46 may be configured to perform the various operations as discussed later. As shown in FIG. 5, if the techniques are implemented partially in software, a device may store instructions for the software in an appropriate non-transitory computer-readable storage medium and may execute the instructions in hardware using one or more processors to perform the techniques of this application. Either of the video encoder 20 and the video decoder 30 may be integrated as a part of a combined encoder/decoder (encoder/decoder, CODEC) in a single device, for example, as shown in FIG. 1b.

The source device 12 and the destination device 14 may include any of a wide range of devices, including any type of handheld or stationary devices, for example, notebook or laptop computers, mobile phones, smart phones, tablets or tablet computers, cameras, desktop computers, set-top boxes, televisions, display devices, digital media players, video gaming consoles, video streaming devices (such as content service servers or content delivery servers), broadcast receiver device, broadcast transmitter device, or the like and may use no or any type of operating system. In some cases, the source device 12 and the destination device 14 may be equipped with components for wireless communication. Therefore, the source device 12 and the destination device 14 may be wireless communication devices.

In some cases, the video coding system 10 shown in FIG. 1a is merely an example, and the technologies of this application are applicable to video coding settings (for example, video encoding or video decoding) that do not necessarily include any data communication between an encoding device and a decoding device. In other examples, data is retrieved from a local memory, streamed over a network, or the like. A video encoding device may encode data and store encoded data into the memory, and/or a video decoding device may retrieve data from a memory and decode the data. In some examples, encoding and decoding are performed by devices that do not communicate with each other, but simply encode data into a memory and/or retrieve data from the memory and decode the data.

FIG. 1b is an example block diagram of a video coding system 40 according to an embodiment of this application. As shown in FIG. 1b, the video coding system 40 may include an imaging device 41, a video encoder 20, a video decoder 30 (and/or a video encoder/decoder implemented through a processing circuit 46), an antenna 42, one or more processors 43, one or more memories 44, and/or a display device 45.

As shown in FIG. 1b, the imaging device 41, the antenna 42, the processing circuit 46, the video encoder 20, the video decoder 30, the processor 43, the memory 44, and/or the display device 45 can communicate with each other. The video coding system 40 may include only the video encoder 20 or only the video decoder 30 in different examples.

In some examples, the antenna 42 may be configured to transmit or receive an encoded bitstream of video data. Further, in some examples, the display device 45 may be configured to present the video data. The processing circuit 46 may include application-specific integrated circuit (application-specific integrated circuit, ASIC) logic, a graphics processing unit, a general-purpose processor, or the like. The video coding system 40 may also include the optional processor 43. The optional processor 43 may similarly include application-specific integrated circuit (application-specific integrated circuit, ASIC) logic, a graphics processing unit, a general-purpose processor, or the like. In addition, the memory 44 may be a memory of any type, for example, a volatile memory (for example, a static random access memory (static random access memory, SRAM), a dynamic random access memory (dynamic random access memory, DRAM)), or a nonvolatile memory (for example, a flash memory). In a non-limitative example, the memory 44 may be implemented by a cache memory. In other examples, the processing circuit 46 may include a memory (for example, a cache) for implementing a picture buffer.

In some examples, the video encoder 20 implemented through the logic circuit may include a picture buffer (which is implemented by, for example, the processing circuit 46 or the memory 44) and a graphics processing unit (which is implemented by, for example, the processing circuit 46). The graphics processing unit may be communicatively coupled to the picture buffer. The graphics processing unit may include the video encoder 20 as implemented via the processing circuit 46 to embody the various modules as discussed with respect to FIG. 2 and/or any other encoder system or subsystem described herein. The logic circuit may be configured to perform various operations described in this specification.

In some examples, the video decoder 30 may be implemented by the processing circuit 46 in a similar manner, to implement various modules described with reference to the video decoder 30 in FIG. 3 and/or any other decoder system or subsystem described in the specification. In some examples, the video decoder 30 implemented through the logic circuit may include a picture buffer (which is implemented by the processing circuit 46 or the memory 44) and a graphics processing unit (which is implemented by, for example, the processing circuit 46). The graphics processing unit may be communicatively coupled to the picture buffer. The graphics processing unit may be included in the video decoder 30 implemented by the processing circuit 46, to implement various modules described with reference to FIG. 3 and/or any other decoder system or subsystem described in the specification.

In some examples, the antenna 42 may be configured to receive an encoded bitstream of video data. As described, the encoded bitstream may include data, an indicator, an index value, mode selection data, or the like related to video frame encoding described in this specification, for example, data related to coding partitioning (for example, a transform coefficient or a quantized transform coefficient, an optional indicator (as described), and/or data defining the coding partitioning). The video coding system 40 may further include the video decoder 30 that is coupled to the antenna 42 and that is configured to decode the encoded bitstream. The display device 45 is configured to display a video frame.

It should be understood that in this embodiment of this application, for the example described with reference to the video encoder 20, the video decoder 30 may be configured to perform a reverse process. With regard to a signaling syntax element, the video decoder 30 may be configured to receive and parse such a syntax element and correspondingly decode related video data. In some examples, the video encoder 20 may perform entropy encoding on the syntax element into an encoded video bitstream. In such examples, the video decoder 30 may parse such syntax element and decode the associated video data accordingly.

For ease of description, embodiments of this application are described by referring to versatile video coding (versatile video coding, VVC) reference software or high efficiency video coding (high-efficiency video coding, HEVC) developed by the joint collaboration team on video coding (joint collaboration team on video coding, JCT-VC) of the ITU-T video coding experts group (video coding experts group, VCEG) and the ISO/IEC motion picture experts group (motion picture experts group, MPEG). A person of ordinary skill in the art understands that embodiments of this application are not limited to the HEVC or the VVC.

Encoder and encoding method

FIG. 2 is an example block diagram of a video encoder 20 according to an embodiment of this application. As shown in FIG. 2, the video encoder 20 includes an input end (or an input interface) 201, a residual calculation unit 204, a transform processing unit 206, a quantization unit 208, a dequantization unit 210, an inverse transform processing unit 212, a reconstruction unit 214, a loop filter 220, a decoded picture buffer (decoded picture buffer, DPB) 230, a mode selection unit 260, an entropy encoding unit 270, and an output end (or output interface) 272. The mode selection unit 260 may include an inter prediction unit 244, an intra prediction unit 254, and a partitioning unit 262. The inter prediction unit 244 may include a motion estimation unit and a motion compensation unit (not shown). The video encoder 20 shown in FIG. 2 may also be referred to as a hybrid video encoder or a video encoder based on a hybrid video codec.

The residual calculation unit 204, the transform processing unit 206, the quantization unit 208, and the mode selection unit 260 form a forward signal path of the encoder 20, and the dequantization unit 210, the inverse transform processing unit 212, the reconstruction unit 214, a buffer 216, the loop filter 220, the decoded picture buffer (decoded picture buffer, DPB) 230, the inter prediction unit 244, and the intra prediction unit 254 form a backward signal path of the encoder. The backward signal path of the encoder 20 corresponds to a signal path of a decoder (refer to a decoder 30 in FIG. 3). The dequantization unit 210, the inverse transform processing unit 212, the reconstruction unit 214, the loop filter 220, the decoded picture buffer 230, the inter prediction unit 244, and the intra prediction unit 254 further form a "built-in decoder" of the video encoder 20.

Picture and picture partitioning (picture and block)

The encoder 20 may be configured to receive, for example, via the input end 201, a picture (or picture data) 17, for example, a picture in a sequence of pictures forming a video or video sequence. The received picture or picture data may also be a pre-processed picture (or pre-processed picture data) 19. For ease of simplicity, the following description refers to the picture 17. The picture 17 may also be referred to as a current picture or a to-be-coded picture (in particular in video coding to distinguish the current picture from other pictures, for example, previously encoded and/or decoded pictures of a same video sequence, that is, a video sequence which also includes the current picture).

A (digital) picture is or may be considered as a two-dimensional array or matrix including samples with intensity values. A sample in the array may also be referred to as a pixel (pixel or pel) (a short form of a picture element). Quantities of samples in horizontal and vertical directions (or axes) of the array or picture define the size and/or resolution of the picture. For representation of color, three color components are usually employed, that is, the picture may be represented as or include three sample arrays. In an RBG format or color space, a picture includes corresponding red, green and blue sample arrays. However, in video coding, each pixel is usually represented in a luminance/chrominance format or color space, for example, YCbCr, which includes a luminance component indicated by Y (sometimes alternatively indicated by L) and two chrominance components indicated by Cb and Cr. The luminance (luma) component Y represents luma or gray level intensity (for example, both are the same in a gray-scale picture), while the two chrominance (chrominance, chroma for short) components Cb and Cr represent chroma or color information components. Accordingly, a picture in a YCbCr format includes a luminance sample array of luminance sample values (Y), and two chrominance sample arrays of chrominance values (Cb and Cr). Pictures in the RGB format may be converted or transformed into the YCbCr format and vice versa. The process is also referred to as color transform or conversion. If a picture is monochrome, the picture may include only a luminance sample array. Accordingly, a picture may be, for example, an array of luma samples in monochrome format or an array of luma samples and two corresponding arrays of chroma samples in 4:2:0, 4:2:2, and 4:4:4 color formats.

In an embodiment, an embodiment of the video encoder 20 may include a picture partitioning unit (not shown in FIG. 2) configured to partition the picture 17 into a plurality of (usually non-overlapping) picture blocks 203. These blocks may also be referred to as root blocks, macro blocks (H.264/AVC), coding tree blocks (coding tree blocks, CTBs), or coding tree units (coding tree units, CTUs) in the H.265/HEVC and VVC standards. The partitioning unit may be configured to: use a same block size for all pictures of a video sequence and a corresponding grid defining the block size, or to change the block size between pictures or subsets or groups of pictures, and partition each picture into the corresponding blocks.

In further embodiments, the video encoder may be configured to directly receive a block 203 of the picture 17, for example, one, several or all blocks forming the picture 17. The picture block 203 may also be referred to as a current picture block or a to-be-coded picture block.

Like the picture 17, the picture block 203 is also or may be considered as a two-dimensional array or matrix of samples with intensity values (sample values), although of a smaller dimension than the picture 17. In other words, the block 203 may include, for example, one sample array (for example, a luma array in case of a monochrome picture 17, or a luma or chroma array in case of a color picture) or three sample arrays (for example, a luma array and two chroma arrays in case of a color picture 17) or any other quantity and/or type of arrays depending on the color format applied. Quantities of samples of the block 203 in the horizontal and vertical directions (or axes) define the size of the block 203. Accordingly, a block may be an array of $M \times N$ (M columns $\times$ N rows) samples, an array of $M \times N$ transform coefficients, or the like.

In an embodiment, the video encoder 20 shown in FIG. 2 is configured to encode the picture 17 block-wisely, for example, encode and predict each block 203.

In an embodiment, the video encoder 20 shown in FIG. 2 may be further configured to partition and/or encode the picture by using slices (also referred to as video slices), where the picture may be partitioned or encoded by using one or more slices (typically non-overlapping). Each slice may include one or more blocks (for example, coding tree units CTUs) or one or more groups of blocks (for example, tiles (tile) in the H.265/HEVC/VVC standard and bricks (brick) in the VVC standard).

In an embodiment, the video encoder 20 shown in FIG. 2 may be further configured to partition and/or encode the picture by using slices/tile groups (also referred to as video tile groups) and/or tiles (also referred to as video tiles). The picture may be partitioned or encoded by using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Residual calculation

The residual calculation unit 204 is configured to calculate a residual block 205 based on the picture block (or an original block) 203 and a prediction block 265 (where the prediction block 265 is described in detail subsequently), for example, obtain the residual block 205 in the pixel domain by subtracting a sample value of the prediction block 265 from a sample value of the picture block 203 sample-wisely (pixel-wisely).

Transform

The transform processing unit 206 may be configured to apply a transform, for example, a discrete cosine transform (discrete cosine transform, DCT) or discrete sine transform (discrete sine transform, DST), on the sample values of the residual block 205 to obtain transform coefficients 207 in the transform domain. The transform coefficients 207 may also be referred to as transform residual coefficients and represent the residual block 205 in the transform domain.

The transform processing unit 206 may be configured to apply integer approximations of DCT/DST, for example, transforms specified in HEVC/H.265. Compared with an orthogonal DCT transform, such integer approximations are usually scaled based on a factor. To preserve a norm of a residual block which is processed through forward and inverse transforms, an additional scale factor is applied as a part of the transform process. The scale factor is usually selected based on some constraints, for example, the scale factor is a power of two for a shift operation, a bit depth of the transform coefficient, and a tradeoff between accuracy and implementation costs. For example, a specific scale factor is specified for the inverse transform by the inverse transform processing unit 212 at the encoder 20 side (and a corresponding inverse transform by, for example, an inverse transform processing unit 312 at the decoder 30 side), and correspondingly, a corresponding scale factor may be specified for the forward transform by the transform processing unit 206 at the encoder 20 side.

In an embodiment, the video encoder 20 (correspondingly, the transform processing unit 206) may be configured to output a transform parameter like one or more transform types, for example, directly output the transform parameter or output the transform parameter after the transform parameter is encoded or compressed by the entropy encoding unit 270, so that, for example, the video decoder 30 may receive and use the transform parameter for decoding.

Quantization

The quantization unit 208 may be configured to quantize the transform coefficients 207 to obtain quantized transform coefficients 209, for example, by applying scalar quantization or vector quantization. The quantized transform coefficient 209 may also be referred to as a quantized residual coefficient 209.

A quantization process may reduce a bit depth related to some or all of the transform coefficients 207. For example, an n-bit transform coefficient may be rounded down to an m-bit transform coefficient during quantization, where n is greater than m. A quantization degree may be modified by adjusting a quantization parameter (quantization parameter, QP). For example, for the scalar quantization, different scales may be used to implement finer or coarser quantization. A smaller quantization step size corresponds to finer quantization, and a larger quantization step size corresponds to coarser quantization. An appropriate quantization step size may be indicated by a quantization parameter (quantization parameter, QP). For example, the quantization parameter may be an index to a predefined set of appropriate quantization step sizes. For example, a smaller quantization parameter may correspond to finer quantization (a smaller quantization step size) and a larger quantization parameter may correspond to coarser quantization (a larger quantization step size), or vice versa. The quantization may include division by a quantization step and a corresponding and/or the inverse dequantization, for example, by the dequantization unit 210, may include multiplication by the quantization step. Embodiments according to some standards such as HEVC may be configured to use a quantization parameter to determine the quantization step size. Generally, the quantization step size may be calculated based on a quantization parameter by using a fixed point approximation of an equation including division. Additional scale factors may be introduced for quantization and dequantization to restore the norm of the residual block, where the norm of the residual block may be modified because of a scale used in the fixed point approximation of the equation for the quantization step size and the quantization parameter. In one example implementation, the scaling of the inverse transform and dequantization might be combined. Alternatively, customized quantization tables may be used and signaled from the encoder to the decoder, for example, in a bitstream. The quantization is a lossy operation, where the loss increases with increasing of the quantization step size.

In an embodiment, the video encoder 20 (correspondingly, the quantization unit 208) may be configured to output a quantization parameter (quantization parameter, QP), for example, directly output the quantization parameter or output the quantization parameter after the quantization parameter is encoded or compressed by the entropy encoding unit 270, so that, for example, the video decoder 30 may receive and use the quantization parameter for decoding.

Dequantization

The dequantization unit 210 is configured to apply the dequantization of the quantization unit 208 on the quantized coefficients to obtain dequantized coefficients 211, for example, by applying the dequantization scheme of the quantization scheme applied by the quantization unit 208 based on or using the same quantization step size as the quantization unit 208. The dequantized coefficients 211 may also be referred to as dequantized residual coefficients 211 and correspond, although typically not identical to the transform coefficients due to the loss by quantization, to the transform coefficients 207.

Inverse transform

The inverse transform processing unit 212 is configured to apply the inverse transform of the transform applied by the transform processing unit 206, for example, an inverse discrete cosine transform (discrete cosine transform, DCT) or an inverse discrete sine transform (discrete sine transform, DST), to obtain a reconstructed residual block 213 (or corresponding dequantized coefficients 213) in the pixel domain. The reconstructed residual block 213 may also be referred to as a transform block 213.

Reconstruction

The reconstruction unit 214 (for example, an adder 214) is configured to add the transform block 213 (that is, the reconstructed residual block 213) to the prediction block 265 to obtain a reconstructed block 215 in the pixel domain, for example, by adding the sample values of the reconstructed residual block 213 and the sample values of the prediction block 265.

Filtering

A loop filter unit 220 (or a "loop filter" 220 for short) is configured to filter the reconstructed block 215 to obtain a filtered block 221, or in general, to filter reconstructed samples to obtain filtered sample values. The loop filter unit is, for example, configured to smooth pixel transitions, or otherwise improve the video quality. The loop filter unit 220 may include one or more loop filters such as a de-blocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. For example, the loop filter unit 220 may include a de-blocking filter, a SAO filter, and an ALF. The order of the filtering process may be the deblocking filter, the SAO filter, and the ALF. For another example, a process referred to as luma mapping with chroma scaling (luma mapping with chroma scaling, LMCS) (namely, an adaptive in-loop reshaper) is added. This process is performed before deblocking. In another example, a de-blocking filter process may be also applied to internal sub-block edges, for example, affine sub-block edges, ATMVP sub-block edges, sub-block transform (sub-block transform, SBT) edges, and intra sub-partition (intra sub-partition, ISP) edges. Although the loop filter unit 220 is shown as the loop filter in FIG. 2, in another configuration, the loop filter unit 220 may be implemented as a post-loop filter. The filtered block 221 may also be referred to as a filtered reconstructed block 221.

In an embodiment, the video encoder 20 (correspondingly, the loop filter unit 220) may be configured to output loop filter parameters (such as a SAO filter parameter, an ALF parameter, or an LMCS parameter), for example, directly output the loop filter parameters or output the loop filter parameters after entropy encoding is performed on the loop filter parameters by the entropy encoding unit 270, so that, for example, the decoder 30 may receive and use a same loop filter parameter or different loop filter parameters for decoding.

Decoded picture buffer

The decoded picture buffer (decoded picture buffer, DPB) 230 may be a memory that stores reference pictures, or in general reference picture data, for encoding video data by the video encoder 20. The DPB 230 may be formed by any of a variety of memory devices, such as a dynamic random access memory (dynamic random access memory, DRAM), including a synchronous DRAM (synchronous DRAM, SDRAM), a magnetoresistive RAM (magnetoresistive RAM, MRAM), a resistive RAM (resistive RAM, RRAM), or other types of memory devices. The decoded picture buffer 230 may be configured to store one or more filtered blocks 221. The decoded picture buffer 230 may be further configured to store other previously filtered blocks, for example, previously reconstructed and filtered blocks 221, of the same current picture or of different pictures, for example, previously reconstructed pictures, and may provide complete previously reconstructed, that is, decoded, pictures (and corresponding reference blocks and samples) and/or a partially reconstructed current picture (and corresponding reference blocks and samples), for example for inter prediction. The decoded picture buffer 230 may be further configured to store one or more unfiltered reconstructed blocks 215, or generally store unfiltered reconstructed samples, for example, the reconstructed block 215 that is not filtered by the loop filter unit 220, or a reconstructed block or a reconstructed sample on which no any other processing is performed.

Mode selection (partitioning and prediction)

The mode selection unit 260 includes the partitioning unit 262, the inter prediction unit 244, and the intra prediction unit 254, and is configured to receive or obtain raw picture data, for example, an original block 203 (the current block 203 of the current picture 17), and reconstructed picture data, for example, filtered and/or unfiltered reconstructed samples or blocks of the same (current) picture and/or from one or a plurality of previously decoded pictures, for example, from the decoded picture buffer 230 or another buffer (for example, a line buffer, not shown). The reconstructed picture data is used as reference picture data for prediction, for example, inter prediction or intra prediction, to obtain a prediction block 265 or a predictor 265.

The mode selection unit 260 may be configured to determine or select partitioning for a current block (including non-partitioning) and a prediction mode (for example, an intra or inter prediction mode) and generate a corresponding prediction block 265, which is used for calculation of the residual block 205 and for reconstruction of the reconstructed block 215.

In an embodiment, the mode selection unit 260 may be configured to select the partitioning and prediction mode (for example, from those supported by or available for the mode selection unit 260), which provides best matching or a minimum residual (the minimum residual means better compression for transmission or storage), or a minimum signaling overhead (the minimum signaling overhead means better compression for transmission or storage), or which considers or balances both. The mode selection unit 260 may be configured to determine the partitioning and prediction mode based on rate distortion optimization (rate distortion Optimization, RDO), that is, select the prediction mode which provides a minimum rate distortion. The terms "best", "lowest", "optimal" and the like in the specification do not necessarily mean "best", "lowest", "optimal" in general, but may also refer to situations in which termination or selection criteria are met. For example, values that exceed or fall below a threshold or other restrictions may result in "suboptimal selections" but reduce complexity and processing time.

In other words, the partitioning unit 262 may be configured to partition a picture of a video sequence into a sequence of coding tree units (coding tree units, CTUs), and a CTU 203 may be further partitioned into smaller block partitions or sub-blocks (which form the blocks again), for example, iteratively using quad-tree partitioning (quad-tree partitioning, QT), binary-tree partitioning (binary-tree partitioning, BT), triple-tree partitioning (triple-tree partitioning, TT), or any combination thereof, and to perform, for example, prediction for each of the block partitions or sub-blocks, where mode selection includes selection of a tree structure of the partitioned block 203 and prediction modes applied to each of the block partitions or sub-blocks.

In the following partitioning (for example, by the partitioning unit 262) and prediction processing (for example, by the inter prediction unit 244 and the intra prediction unit 254) performed by the video encoder 20 will be explained in more detail.

Partitioning

The partitioning unit 262 may partition (or split) a picture block (or a CTU) 203 into smaller partitions, for example, square or rectangular smaller blocks. For a picture that has three sample arrays, a CTU includes a block of N×N luminance samples and two corresponding blocks of chrominance samples. A maximum allowed size of the luma block in the CTU is specified to be 128×128 in the developing versatile video coding (versatile video coding, VVC) standard, but it may be specified to be a value other than 128×128 in the future, for example, 256×256. The CTUs of a picture may be clustered/grouped as slices/tile groups, tiles, or bricks. A tile covers a rectangular area of a picture, and a tile may be divided into one or more bricks. A brick includes a plurality of CTU rows in a tile. A tile that is not partitioned into a plurality of bricks can be referred to as a brick. However, a brick is a true subset of a tile and is not referred to as a tile. There are two modes of tile groups are supported in VVC, namely the raster-scan slice/tile group mode and the rectangular slice mode. In the raster-scan tile group mode, a slice/tile group includes a sequence of tiles in tile raster scan of a picture. In the rectangular slice mode, a slice includes a plurality of bricks of a picture that collectively form a rectangular area of the picture. The bricks within a rectangular slice are in an order of brick raster scan of the slice. These smaller blocks (which may also be referred to as sub-blocks) may be further partitioned into even smaller partitions. This is also referred to tree-partitioning or hierarchical tree-partitioning, where a root block, for example, at root tree-level 0 (hierarchy-level 0, depth 0), may be recursively partitioned, for example, partitioned into two or more blocks of a next lower tree-level, for example, nodes at tree-level 1 (hierarchy-level 1, depth 1). These blocks may be again partitioned into two or more blocks of a next lower level, for example, tree-level 2 (hierarchy-level 2, depth 2), and the like, until the partitioning is terminated (for example, because a termination criterion is fulfilled, for example, a maximum tree depth or minimum block size is reached). Blocks which are not further partitioned are also referred to as leaf-blocks or leaf nodes of the tree. A tree using partitioning into two partitions is referred to as a binary tree (binary-tree, BT), a tree using partitioning into three partitions is referred to as a ternary tree (ternary-tree, TT), and a tree using partitioning into four partitions is referred to as a quad tree (quad-tree, QT).

For example, a coding tree unit (CTU) may be or include a CTB of luminance samples, two corresponding CTBs of chrominance samples of a picture that has three sample arrays, a CTB of samples of a monochrome picture, or a CTB of samples of a picture that is encoded by using three separate color planes and syntax structures (for coding the samples). Correspondingly, a coding tree block (CTB) may be a block of N×N samples for some value of N such that the division of a component into CTBs is partitioning. A coding unit (coding unit, CU) may be or include a coding block of luminance samples, two corresponding coding blocks of chrominance samples of a picture that has three sample arrays, a coding block of samples of a monochrome picture, or a coding block of samples of a picture that is coded by using three separate color planes and syntax structures (used to code the samples). Correspondingly a coding block (CB) may be a block of M×N samples for some values of M and N such that the division of a CTB into coding blocks is partitioning.

In embodiments, for example, according to HEVC, a coding tree unit (CTU) may be split into CUs by using a quad-tree structure denoted as a coding tree. The decision whether to code a picture area using inter (temporal) or intra (spatial) prediction is made at the leaf CU level. Each leaf CU can be further split into one, two, or four PUs according to a PU splitting type. Inside one PU, the same prediction process is applied and the relevant information is transmitted to the decoder on a PU basis. After obtaining the residual block by applying the prediction process based on the PU splitting type, a leaf CU can be partitioned into transform units (TUs) according to another quadtree structure similar to the coding tree for the CU.

For example, in an embodiment, according to a developing latest video coding standard (referred to as versatile video coding (VVC)), a combined quad tree with a nested multi-type tree (such as a binary tree and a ternary tree) is used to split a segmentation structure for partitioning a coding tree unit. In a coding tree structure in a coding tree unit, a CU may be square or rectangular. For example, the coding tree unit (CTU) is first partitioned by a quad-tree structure. Then, quad-tree leaf nodes can be further partitioned by a multi-type tree structure. There are four splitting types in the multi-type tree structure: vertical binary-tree splitting (SPLIT_BT_VER), horizontal binary-tree splitting (SPLIT_BT_HOR), vertical ternary-tree splitting (SPLIT_TT_VER), and horizontal ternary-tree splitting (SPLIT_TT_HOR). The multi-type tree leaf nodes are referred to as coding units (CUs), and unless the CU is too large for the maximum transform length, this segmentation is used for prediction and transform processing without any further partitioning. This means that, in most cases, the CU, the PU, and the TU have a same block size in the quad tree with a nested multi-type tree coding block structure. An exception occurs when a maximum supported transform length is smaller than a width or height of a color component of the CU. A unique signaling mechanism of partition splitting information in the quad tree with the nested multi-type tree coding structure is formulated in the VVC. In the signaling mechanism, a coding tree unit (CTU) is treated as the root of a quad tree and is first partitioned by a quad tree structure. Each quad-tree leaf node (when sufficiently large to allow it) is then further partitioned by a multi-type tree structure. In the multi-type tree structure, a first flag (mtt_split_cu_flag) is signaled to indicate whether a node is further partitioned; when a node is further partitioned, a second flag (mtt_split_cu_vertical_flag) is signaled to indicate a splitting direction, and then a third flag (mtt_split_cu_binary_flag) is signaled to indicate whether the splitting is binary-tree splitting or ternary-tree splitting. Based on the values of mtt_split_cu_vertical_flag and mtt_split_cu_binary_flag, the multi-type tree splitting mode (MttSplitMode) of a CU can be derived by a decoder based on a predefined rule or a table. It should be noted, for a specific design, for example, $64 \times 64$ luma block and $32 \times 32$ chroma pipelining design in VVC hardware decoders, TT splitting is not allowed when either a width or a height of a luma coding block is greater than 64. TT splitting is also not allowed when either a width or a height of a chroma coding block is larger than 32. In the pipeline design, a picture is split into a plurality of virtual pipeline data units (virtual pipeline data units, VPDUs), and the VPDUs are defined as non-overlapping units in the picture. In hardware decoders, successive VPDUs are processed by a plurality of pipeline stages simultaneously. A VPDU size is roughly proportional to a buffer size in most pipeline stages. Therefore, a small VPDU size needs to be kept. In most hardware decoders, the VPDU size can be set to a maximum transform block (transform block, TB) size. However, in the VVC, ternary-tree (TT) partitioning and binary-tree (BT) partitioning may lead to an increase in the VPDU size.

In addition, it should be noted that, when a portion of a tree node block exceeds the bottom or a right picture boundary, the tree node block is forced to be split until the all samples of every coded CU are located inside the picture boundaries.

For example, the intra sub-partition (intra sub-partition, ISP) tool may divide a luminance intra prediction block vertically or horizontally into two or four sub-partitions based on a block size.

In one example, the mode selection unit 260 of the video encoder 20 may be configured to perform any combination of the partitioning techniques described herein.

As described above, the video encoder 20 is configured to determine or select the best or an optimum prediction mode from a set of (pre-determined) prediction modes. The prediction mode set may include, for example, an intra prediction mode and/or an inter prediction mode.

Intra prediction

An intra prediction mode set may include 35 different intra prediction modes, for example, non-directional modes such as a DC (or average) mode and a planar mode, or directional modes such as those defined in HEVC, or may include 67 different intra prediction modes, for example, non-directional modes such as a DC (or average) mode and a planar mode, or directional modes such as those defined in VVC. As an example, several conventional angular intra prediction modes are adaptively replaced with wide-angle intra prediction modes for the non-square blocks, for example, as defined in VVC. As another example, to avoid division operations for DC prediction, only the longer side is used to compute the average for non-square blocks. In addition, the results of intra prediction of planar mode may be further modified by using a position dependent intra prediction combination (position dependent intra prediction combination, PDPC) method.

The intra prediction unit 254 is configured to use reconstructed samples of neighboring blocks of the same current picture to generate an intra prediction block 265 in an intra prediction mode of the set of intra prediction modes.

The intra prediction unit 254 (or in general the mode selection unit 260) is further configured to output intra prediction parameters (or in general information indicating the selected intra prediction mode for the block) to the entropy encoding unit 270 in form of syntax elements 266 for inclusion into the encoded picture data 21, so that the video decoder 30 may perform an operation, for example, receive and use a prediction parameter for decoding.

Intra prediction modes in HEVC include a direct current prediction mode, a planar prediction mode, and 33 angle prediction modes. That is, there are 35 candidate prediction modes in total. A current block may use pixels of reconstructed picture blocks on left and upper sides as references to perform intra prediction. A picture block that is in a surrounding area of the current block and that is used to perform intra prediction on the current block becomes a reference block, and a pixel in the reference block is referred to as a reference pixel. In the 35 candidate prediction modes, the direct current prediction mode is applicable to an area whose texture is flat in the current block, and all pixels in the area use an average value of reference pixels in the reference block as prediction. The planar prediction mode is applicable to a picture block whose texture changes smoothly. For the current block that meets the condition, bilinear interpolation is performed by using a reference pixel in a reference block as prediction of all pixels in the current block. In the angle prediction mode, a value of a reference pixel in a corresponding reference block is copied along an angle as prediction of all pixels in the current block by using a feature that texture of the current block is highly correlated with texture of a neighboring reconstructed picture block.

An HEVC encoder selects an optimal intra prediction mode from the 35 candidate prediction modes for the current block, and writes the optimal intra prediction mode into a video bitstream. To improve coding efficiency of intra prediction, the encoder/decoder derives three most probable modes from respective optimal intra prediction modes of reconstructed picture blocks that use intra prediction in the surrounding area. If the optimal intra prediction mode selected for the current block is one of the three most probable modes, a first index is encoded to indicate that the selected optimal intra prediction mode is one of the three most probable modes. If the selected optimal intra prediction mode is not one of the three most probable modes, a second index is encoded to indicate that the selected optimal intra prediction mode is one of the other 32 modes (modes other than the three most probable modes in the 35 candidate prediction modes). The HEVC standard uses a 5-bit fixed-length code as the foregoing second index.

A method for deriving the three most probable modes by the HEVC encoder includes: selecting optimal intra prediction modes of the left neighboring picture block and the upper neighboring picture block of the current block, and putting the optimal intra prediction modes into a set; and if the two optimal intra prediction modes are the same, retaining only one optimal intra prediction mode in the set. If the two optimal intra prediction modes are the same and both are angular prediction modes, two angular prediction modes adjacent to this angle direction are further selected and added to the set. Otherwise, the planar prediction mode, the direct current mode, and a vertical prediction mode are sequentially selected and added to the set until a quantity of modes in the set reaches 3.

After performing entropy decoding on the bitstream, the HEVC decoder obtains mode information of the current block. The mode information includes an identifier indicating whether the optimal intra prediction mode of the current block is in the three most probable modes, an index of the optimal intra prediction mode of the current block in the three most possible modes, or an index of the optimal intra prediction mode of the current block in the other 32 modes.

Inter prediction

In a possible implementation, a set of inter prediction modes depends on available reference pictures (that is, previous at least partially decoded pictures, for example, stored in the DBP 230) and other inter prediction parameters, for example, whether the whole reference picture or only a part of the reference picture, for example, a search window area around the area of the current block, is used for searching for a best matching reference block, and/or for example, whether pixel interpolation is applied, for example, half/semi-pel, quarter-pel, and/or 1/16 pel interpolation.

In addition to the foregoing prediction modes, a skip mode and/or a direct mode may be applied.

For example, a merge candidate list of an extended merge prediction mode includes the following five classes of candidates in order: spatial MVP from spatial neighboring CUs, temporal MVP from collocated CUs, history-based MVP from an FIFO table, pairwise average MVP, and zero MVs. A bilateral-matching-based decoder side motion vector refinement (decoder side motion vector refinement, DMVR) may be applied to increase accuracy of the MVs of the merge mode. Merge mode with MVD (merge mode with MVD, MMVD) comes from merge mode with motion vector differences. An MMVD flag is signaled right after sending a skip flag and a merge flag to specify whether the MMVD is used for a CU. CU-level adaptive motion vector resolution (adaptive motion vector resolution, AMVR) may be applied. The AMVR allows MVD of the CU to be coded in different precision. An MVD of a current CU may be adaptively selected based on a prediction mode of the current CU. When a CU is coded in the merge mode, a combined inter/intra prediction (combined inter/intra prediction, CIIP) mode may be applied to the current CU. Weighted averaging of inter and intra prediction signals is performed to obtain the CIIP. For affine motion compensated prediction, an affine motion field of the block is described by motion information of two control point (4-parameter) or three control point (6-parameter) motion vectors. Subblock-based temporal motion vector prediction (subblock-based temporal motion vector prediction, SbTMVP), which is similar to the temporal motion vector prediction (temporal motion vector prediction, TMVP) in HEVC, but predicts the motion vectors of the sub-CUs within the current CU. A bi-directional optical flow (bi-directional optical flow, BDOF), previously referred to as BIO, is a simpler version that requires less computation, especially in terms of quantity of multiplications and the size of the multiplier. In a triangle partitioning mode, a CU is split evenly into two triangle-shaped partitions through either diagonal splitting or anti-diagonal splitting. Besides, the bi-prediction mode is extended beyond simple averaging to allow weighted averaging of the two prediction signals.

The inter prediction unit 244 may include a motion estimation (motion estimation, ME) unit and a motion compensation (motion compensation, MC) unit (both not shown in FIG. 2). The motion estimation unit may be configured to receive or obtain the picture block 203 (the current picture block 203 of the current picture 17) and a decoded picture 231, or at least one or more previously reconstructed blocks, for example, reconstructed blocks of one or more other/different previously decoded pictures 231, for motion estimation. For example, a video sequence may include the current picture and the previously decoded picture 231, or in other words, the current picture and the previously decoded picture 231 may be a part of or form a sequence of pictures forming the video sequence.

For example, the encoder 20 may be configured to select a reference block from a plurality of reference blocks of a same picture or different pictures of a plurality of other pictures and provide a reference picture (or a reference picture index) and/or an offset (spatial offset) between a position (x and y coordinates) of the reference block and a position of the current block as inter prediction parameters to the motion estimation unit. This offset is also referred to as a motion vector (motion vector, MV).

The motion compensation unit is configured to obtain, for example, receive, an inter prediction parameter and perform inter prediction based on or using the inter prediction parameter to obtain an inter prediction block 246. Motion compensation performed by the motion compensation unit may include extracting or generating a prediction block based on a motion/block vector determined through motion estimation, and may further include performing interpolation on sub-pixel precision. Interpolation filtering may be performed to generate a sample of another pixel from a sample of a known pixel, to potentially increase a quantity of candidate prediction blocks that may be used to encode a picture block. Upon receiving the motion vector corresponding to the PU of the current picture block, the motion compensation unit may locate a prediction block to which the motion vector points in one of the reference picture lists.

The motion compensation unit may further generate syntax elements related to a block and a video slice for use by the video decoder 30 in decoding picture blocks of the video slice. In addition or as an alternative to slices and corresponding syntax elements, tile groups and/or tiles and corresponding syntax elements may be generated or used.

In a process of obtaining a candidate motion vector list in an advanced motion vector prediction (advanced motion vector prediction, AMVP) mode, a motion vector (motion vector, MV) that may be added to the candidate motion vector list as an alternative includes MVs of spatially neighboring and temporally neighboring picture blocks of the current block. The MV of the spatially neighboring picture block may include an MV of a left candidate picture block of the current block and an MV of an upper candidate picture block of the current block.

After the candidate motion vector list is obtained, an optimal MV is determined from the candidate motion vector list based on a rate distortion cost (rate distortion cost, RD cost), and a candidate motion vector with a minimum RD cost is used as a motion vector predictor (motion vector predictor, MVP) of the current block. The rate distortion cost is calculated according to the following formula:

$$J = SAD + \lambda R$$

J represents an RD cost, SAD is a sum of absolute differences (sum of absolute differences, SAD), obtained through motion estimation based on a candidate motion vector, between a pixel value of a prediction block and a pixel value of the current block, R represents a bit rate, and $\lambda$ represents a Lagrange multiplier.

The encoder side transfers an index of the determined MVP in the candidate motion vector list to the decoder side. Further, the encoder side may perform motion search in an MVP-centered neighboring domain, to obtain an actual motion vector of the current block. The encoder side calculates a motion vector difference (motion vector difference, MVD) between the MVP and the actual motion vector, and transfers the MVD to the decoder side. The decoder side parses the index, finds the corresponding MVP in the candidate motion vector list based on the index, parses the MVD, and adds the MVD and the MVP to obtain the actual motion vector of the current block.

In a process of obtaining a candidate motion information list in a merge (Merge) mode, motion information that can be added to the candidate motion information list as an alternative includes motion information of the spatially neighboring picture block or temporally neighboring picture block of the current block. Candidate motion information corresponding to the spatially neighboring picture block in the candidate motion information list comes from five spatially neighboring blocks (A0, A1, B0, B1, and B2). If the spatially neighboring block is unavailable or is in an intra prediction mode, motion information of the spatially neighboring block is not added to the candidate motion information list. Temporal candidate motion information of the current block is obtained by scaling an MV of a block at a corresponding position in a reference frame based on picture order counts (picture order counts, POCs) of the reference frame and a current frame. Whether a block at a position T in the reference frame is available is first determined. If the block is not available, a block at a position C is selected. After the candidate motion information list is obtained, optimal motion information is determined from the candidate motion information list based on the RD cost as motion information of the current block. The encoder side transmits an index value (denoted as a merge index) of a position of the optimal motion information in the candidate motion information list to the decoder side.

Entropy encoding

The entropy encoding unit 270 is configured to apply, for example, an entropy coding algorithm or scheme (for example, a variable length coding (variable length coding, VLC) scheme, a context adaptive VLC (context adaptive VLC, CALVC) scheme, an arithmetic coding scheme, a binarization algorithm, context adaptive binary arithmetic coding (context adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding, or another entropy coding methodology or technique) on the quantization residual coefficients 209, inter prediction parameters, intra prediction parameters, loop filter parameters, and/or other syntax elements, to obtain encoded picture data 21 which can be output via the output end 272, for example, in the form of an encoded bitstream 21, so that, for example, the video decoder 30 may receive and use the parameters for decoding. The encoded bitstream 21 may be transmitted to the video decoder 30, or stored in a memory for later transmission or retrieval by the video decoder 30.

Another structural variation of the video encoder 20 may be used to encode the video stream. For example, a non-transform-based encoder 20 may quantize a residual signal directly without the transform processing unit 206 for some blocks or frames. In another implementation, the encoder 20 may have the quantization unit 208 and the dequantization unit 210 combined into a single unit.

Decoder and decoding method

FIG. 3 is an example block diagram of a video decoder 30 according to an embodiment of this application. The video decoder 30 is configured to receive encoded picture data 21 (for example, the encoded bitstream 21), for example, encoded by the encoder 20, to obtain a decoded picture 331. The encoded picture data or bitstream includes information for decoding the encoded picture data, for example, data that represents picture blocks of an encoded video slice (and/or tile groups or tiles), and related syntax elements.

In the example in FIG. 3, the decoder 30 includes an entropy decoding unit 304, a dequantization unit 310, an inverse transform processing unit 312, a reconstruction unit 314 (for example, an adder 314), a loop filter 320, a decoded picture buffer (DBP) 330, a mode application unit 360, an inter prediction unit 344, and an intra prediction unit 354. The inter prediction unit 344 may be or include a motion compensation unit. In some examples, the video decoder 30 may perform a decoding process generally reciprocal to the encoding process described with reference to the video encoder 100 in FIG. 2.

As explained with regard to the encoder 20, the dequantization unit 210, the inverse transform processing unit 212, the reconstruction unit 214, the loop filter 220, the decoded picture buffer DPB 230, the inter prediction unit 344, and the intra prediction unit 354 are further referred to as forming a "built-in decoder" of the video encoder 20. Accordingly, the dequantization unit 310 may be identical in function to the dequantization unit 110, the inverse transform processing unit 312 may be identical in function to the inverse transform processing unit 122, the reconstruction unit 314 may be identical in function to the reconstruction unit 214, the loop filter 320 may be identical in function to the loop filter 220, and the decoded picture buffer 330 may be identical in function to the decoded picture buffer 230. Therefore, the explanations provided for corresponding units and functions of the video encoder 20 are correspondingly applicable to corresponding units and functions of the video decoder 30.

Entropy decoding

The entropy decoding unit 304 is configured to parse the bitstream 21 (or in general encoded picture data 21) and perform, for example, entropy decoding on the encoded picture data 21 to obtain quantized coefficients 309 and/or decoded coding parameters (not shown in FIG. 3), for example, any or all of inter prediction parameters (for example, a reference picture index and a motion vector), intra prediction parameters (for example, an intra prediction mode or an index), transform parameters, quantization parameters, loop filter parameters, and/or other syntax elements. The entropy decoding unit 304 may be configured to apply a decoding algorithm or scheme corresponding to the encoding scheme of the entropy encoding unit 270 of the encoder 20. The entropy decoding unit 304 may be further configured to provide the inter prediction parameter, the intra prediction parameter, and/or another syntax element to the mode application unit 360, and provide another parameter to another unit of the decoder 30. The video decoder 30 may receive the syntax elements at the video slice level and/or the video block level. In addition or as an alternative to slices and corresponding syntax elements, tile groups and/or tiles and corresponding syntax elements may be received or used.

Dequantization

The dequantization unit 310 may be configured to receive a quantization parameter (quantization parameter, QP) (or generally, information related to dequantization) and a quantized coefficient from the encoded picture data 21 (for example, parsed and/or decoded by the entropy decoding unit 304), and dequantize the decoded quantized coefficient 309 based on the quantization parameter, to obtain a dequantized coefficient 311. The dequantized coefficient 311 may also be referred to as a transform coefficient 311. The dequantization process may include use of a quantization parameter calculated by the video encoder 20 for each video block in a video slice to determine a degree of quantization and, likewise, a degree of dequantization that needs to be applied.

Inverse transform

The inverse transform processing unit 312 may be configured to receive the dequantized coefficients 311, also referred to as the transform coefficients 311, and apply a transform to the dequantized coefficients 311 to obtain a reconstructed residual block 213 in the pixel domain. The reconstructed residual block 213 may also be referred to as a transform block 313. The transform may be an inverse transform, for example, an inverse DCT, an inverse DST, an inverse integer transform, or a conceptually similar inverse transform process. The inverse transform processing unit 312 may be further configured to receive transform parameters or corresponding information from the encoded picture data 21 (for example, by parsing and/or decoding, for example, by the entropy decoding unit 304) to determine the transform to be applied to the dequantized coefficients 311.

Reconstruction

The reconstruction unit 314 (for example, the adder 314) is configured to add the reconstructed residual block 313 to the prediction block 365 to obtain a reconstructed block 315 in the pixel domain, for example, by adding the sample values of the reconstructed residual block 313 and the sample values of the prediction block 365.

Filtering

The loop filter unit 320 (either in or after a coding loop) is configured to filter the reconstructed block 315 to obtain a filtered block 321, to perform smooth pixel conversion or improve video quality. The loop filter unit 320 may include one or more loop filters such as a de-blocking filter, a sample-adaptive offset (sample-adaptive offset, SAO) filter, or one or more other filters, for example, an adaptive loop filter (adaptive loop filter, ALF), a noise suppression filter (noise suppression filter, NSF), or any combination thereof. For example, the loop filter unit 220 may include a de-blocking filter, a SAO filter, and an ALF. The order of the filtering process may be the deblocking filter, the SAO filter, and the ALF. For another example, a process referred to as luma mapping with chroma scaling (luma mapping with chroma scaling, LMCS) (namely, an adaptive in-loop reshaper) is added. This process is performed before deblocking. In another example, a de-blocking filter process may be also applied to internal sub-block edges, for example, affine sub-block edges, ATMVP sub-block edges, sub-block transform (sub-block transform, SBT) edges, and intra sub-partition (intra sub-partition, ISP) edges. Although the loop filter unit 320 is shown as the loop filter in FIG. 3, in another configuration, the loop filter unit 320 may be implemented as a post-loop filter.

Decoded picture buffer

A decoded video block 321 of a picture is then stored in the decoded picture buffer 330. The decoded picture buffer 330 stores a decoded picture 331 as a reference picture, and the reference picture is used for subsequent motion compensation for another picture and/or for separate output and display.

The decoder 30 is configured to output a decoded picture 311, for example, via an output end 312, for presentation or viewing to a user.

Prediction

The inter prediction unit 344 may be identical in function to the inter prediction unit 244 (in particular to the motion compensation unit), and the intra prediction unit 354 may be identical in function to the inter prediction unit 254. The inter prediction unit 344 and the intra prediction unit 354 determine to split or partition and perform prediction based on the partitioning and/or prediction parameter or corresponding information received from the encoded picture data 21 (for example, parsed and/or decoded by the entropy decoding unit 304). The mode application unit 360 may be configured to perform prediction (intra or inter prediction) on each block based on a reconstructed picture or block or a corresponding sample (filtered or unfiltered), to obtain the prediction block 365.

When the video slice is coded as an intra coded (intra coded, I) slice, the intra prediction unit 354 of the mode application unit 360 is configured to generate the prediction block 365 for a picture block of the current video slice based on an indicated intra prediction mode and data from previously decoded blocks of the current picture. When the video picture is coded as an inter coded (that is, B or P) slice, the inter prediction unit 344 (for example, the motion compensation unit) of the mode application unit 360 is configured to generate the prediction block 365 for a video block of the current video slice based on the motion vectors and other syntax elements received from the entropy decoding unit 304. For inter prediction, the prediction blocks may be generated from one reference picture in one reference picture list. The video decoder 30 may construct reference frame lists: a list 0 and a list 1, by using a default construction technology based on reference pictures stored in the DPB 330. The same or similar process may be applied for or by embodiments using tile groups (for example, video tile groups) and/or tiles (for example, video tiles) in addition or alternatively to slices (for example, video slices), for example, a video may be encoded using I, P or B tile groups and/or tiles.

The mode application unit 360 is configured to determine the prediction information for a video block of the current video slice by parsing the motion vectors or other syntax elements, and use the prediction information to generate the prediction block for the current video block being decoded. For example, the mode application unit 360 uses some of the received syntax elements to determine a prediction mode (for example, intra or inter prediction) used to encode the video block of the video slice, an inter prediction slice type (for example, a B slice, a P slice, or a GPB slice), construction information for one or more of the reference picture lists for the slice, motion vectors for each inter coded video block of the slice, an inter prediction status for each inter coded video block of the slice, and other information to decode the video blocks in the current video slice. The same or similar process may be applied for or by embodiments using tile groups (for example, video tile groups) and/or tiles (for example, video tiles) in addition or alternatively to slices (for example, video slices), for example, a video may be encoded using I, P or B tile groups and/or tiles.

In an embodiment, the video encoder 30 in FIG. 3 may be further configured to partition and/or decode a picture by using slices (also referred to as video slices), where the picture may be partitioned or decoded by using one or more slices (typically non-overlapping). Each slice may include one or more blocks (for example, CTUs) or one or more groups of blocks (for example, tiles in the H.265/HEVC/VVC standard and bricks in the VVC standard).

In an embodiment, the video decoder 30 shown in FIG. 3 may be further configured to partition and/or decode the picture by using slices/tile groups (also referred to as video tile groups) and/or tiles (also referred to as video tiles). The picture may be partitioned or decoded by using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Other variations of the video decoder 30 may be used to decode the encoded picture data 21. For example, the decoder 30 can generate an output video stream without the loop filter unit 320. For example, a non-transform-based decoder 30 can dequantize the residual signal directly without the inverse transform processing unit 312 for some blocks or frames. In another implementation, the video decoder 30 can have the dequantization unit 310 and the inverse transform processing unit 312 combined into a single unit.

It should be understood that, in the encoder 20 and the decoder 30, a processing result of a current step may be further processed and then output to a next step. For example, after interpolation filtering, motion vector derivation, or loop filtering, a further operation, for example, a clip (clip) or shift (shift) operation, may be performed on a processing result of the interpolation filtering, motion vector derivation, or loop filtering.

It should be noted that further operations may be performed on derived motion vectors of the current block (including but not limit to control point motion vectors in an affine mode, sub-block motion vectors in affine, planar, and ATMVP modes, temporal motion vectors, and so on). For example, a value of a motion vector is constrained to a predefined range according to its representation bit. If the representation bit of the motion vector is bitDepth, the range is from $-2^{(bitDepth-1)}$ to $2^{(bitDepth-1)}-1$, where the "^" represents exponentiation. For example, if bitDepth is set to 16, the range is -32768 to 32767; and if bitDepth is set to 18, the range is -131072 to 131071. For example, the value of the derived motion vector (for example, the MVs of four $4\times4$ sub-blocks within one $8\times8$ block) is constrained, so that the maximum difference between integer parts of the four $4\times4$ sub-block MVs is no more than N pixels, such as no more than one pixel. Two methods for constraining the motion vector based on bitDepth are provided herein.

Although video coding is mainly described in the foregoing embodiments, it should be noted that the embodiments of the coding system 10, the encoder 20, and the decoder 30 and other embodiments described in this specification may also be used for still picture processing or coding, that is, processing or coding of a single picture independent of any preceding or consecutive pictures in video coding. In general, if picture processing is limited to a single picture 17, the inter prediction unit 244 (encoder) and the inter prediction unit 344 (decoder) may not be available. All other functions (also referred to as tools or technologies) of the video encoder 20 and the video decoder 30 may also be used for still picture processing, for example, residual calculation 204/304, transform 206, quantization 208, dequantization 210/310, (inverse) transform 212/312, partitioning 262/362, intra prediction 254/354, and/or loop filtering 220/320, entropy encoding 270, and entropy decoding 304.

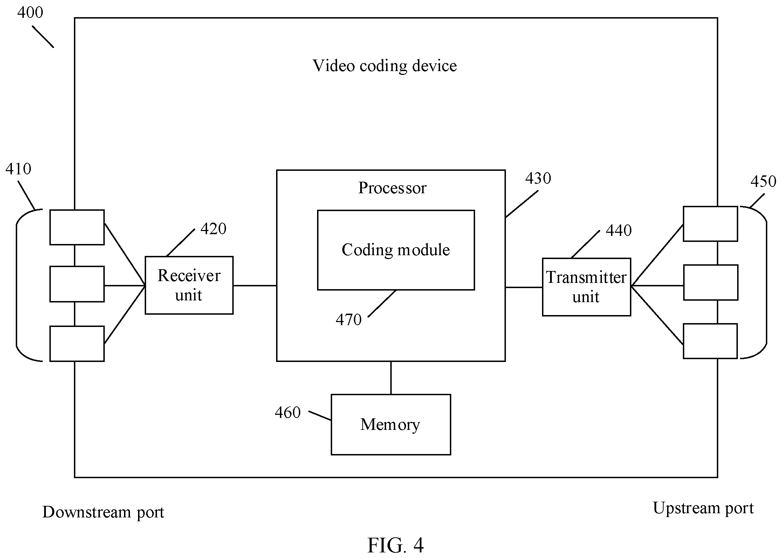

FIG. 4 is an example block diagram of a video coding device 400 according to an embodiment of this application. The video coding device 400 is applicable to implementing the disclosed embodiments described in this specification. In an embodiment, the video coding device 400 may be a decoder such as the video decoder 30 in FIG. 1a or an encoder such as the video encoder 20 in FIG. 1a.

The video coding device 400 includes ingress ports 410 (or input ports 410) and a receiver unit (receiver unit, Rx) 420 for receiving data; a processor, a logic unit, or a central processing unit (central processing unit, CPU) 430 for processing the data, where for example, the processor 430 herein may be a neural network processing unit 430; a transmitter unit (transmitter unit, Tx) 440 and egress ports 450 (or output ports 450) for transmitting the data; and a memory 460 for storing the data. The video coding device 400 may also include optical-to-electrical (optical-to-electrical, OE) components and electrical-to-optical (electrical-to-optical, EO) components coupled to the ingress ports 410, the receiver unit 420, the transmitter unit 440, and the egress ports 450 for egress or ingress of optical or electrical signals.

The processor 430 is implemented by hardware and software. The processor 430 may be implemented as one or more processor chips, cores (for example, a multi-core processor), FPGAs, ASICs, and DSPs. The processor 430 communicates with the ingress ports 410, the receiver unit 420, the transmitter unit 440, the egress ports 450, and the memory 460. The processor 430 includes a coding module 470 (for example, a neural network-based coding module 470). The coding module 470 implements the embodiments disclosed above. For example, the coding module 470 implements, processes, prepares, or provides various coding operations. Therefore, the coding module 470 provides a substantial improvement to functions of the video coding device 400 and affects switching of the video coding device 400 to a different state. Alternatively, the coding module 470 is implemented by using instructions stored in the memory 460 and executed by the processor 430.

The memory 460 may include one or more disks, tape drives, and solid-state drives and may be used as an overflow data storage device, to store programs when such programs are selected for execution, and to store instructions and data that are read during program execution. The memory 460 may be volatile and/or nonvolatile and may be a read-only memory (read-only memory, ROM), a random access memory (random access memory, RAM), a ternary content-addressable memory (ternary content-addressable memory, TCAM), and/or a static random access memory (static random access memory, SRAM).

FIG. 5 is an example block diagram of an apparatus 500 according to an embodiment of this application. The apparatus 500 may be used as either or both of the source device 12 and the destination device 14 in FIG. 1a.

A processor 502 in the apparatus 500 may be a central processing unit. Alternatively, the processor 502 may be any other type of device or a plurality of devices, capable of manipulating or processing information existing or to be developed. Although the disclosed implementations can be implemented by using a single processor such as the processor 502 shown in the figure, advantages in speed and efficiency can be achieved by using more than one processor.

In an implementation, a memory 504 in the apparatus 500 may be a read-only memory (ROM) device or a random access memory (RAM) device. Any other appropriate type of storage device may be used as the memory 504. The memory 504 may include code and data 506 that are accessed by the processor 502 through a bus 512. The memory 504 may further include an operating system 508 and an application 510. The application 510 includes at least one program that permits the processor 502 to perform the method described in this specification. For example, the application 510 may include applications 1 to N, and further include a video coding application that performs the method described in this specification.

The apparatus 500 may further include one or more output devices, such as a display 518. The display 518 may be, in one example, a touch sensitive display that combines a display with a touch sensitive element that is operable to sense touch inputs. The display 518 may be coupled to the processor 502 through the bus 512.

Although the bus 512 in the apparatus 500 is described in this specification as a single bus, the bus 512 may include a plurality of buses. Further, a secondary storage may be directly coupled to another component of the apparatus 500 or may be accessed through a network and may include a single integrated unit, for example, a memory card or a plurality of units, for example, a plurality of memory cards. Therefore, the apparatus 500 may have a variety of configurations.

Embodiments of this application relate to application of a neural network. For ease of understanding, the following first explains some nouns or terms used in embodiments of this application. The nouns or terms are also used as a part of content of the present invention.

(1) Neural network

The neural network (neural network, NN) is a machine learning model. The neural network may include neurons. The neuron may be an operation unit that uses xs and an intercept of 1 as inputs, where an output of the operation unit may be as follows:

$$h_{W,b}(x) = f(W^T x) = f(\sum_{s=1}^{n} W_s x_s + b) \qquad (1\text{-}1),$$

where

s=1, 2, ..., or n, n is a natural number greater than 1, Ws is a weight of xs, b is a bias of the neuron, and f is an activation function (activation function) of the neuron, and is used to introduce a nonlinear feature into the neural network to convert an input signal in the neuron into an output signal. The output signal of the activation function may serve as an input of a next convolution layer. The activation function may be a sigmoid function. The neural network is a network formed by connecting many single neurons together, that is, an output of a neuron may be an input of another neuron. An input of each neuron may be connected to a local receptive field of a previous layer to extract a feature of the local receptive field. The local receptive field may be an area including several neurons.

(2) Deep neural network

The deep neural network (deep neural network, DNN), also referred to as a multi-layer neural network, may be understood as a neural network with many hidden layers. There is no special measurement criterion for "many" herein. The DNN is divided based on positions of different layers, and a neural network in the DNN may be divided into three types: an input layer, a hidden layer, and an output layer. Generally, the first layer is the input layer, the last layer is the output layer, and the middle layer is the hidden layer. The layers are fully connected. To be specific, any neuron at an $i^{th}$ layer is necessarily connected to any neuron at an $(i+1)^{th}$ layer. Although the DNN seems complex, the DNN is actually not complex in terms of operation at each layer, and is simply expressed as the following linear relationship expression: $\vec{y} = \alpha(W\vec{x} + \vec{b})$, where $\vec{x}$ is an input vector, $\vec{y}$ is an output vector, $\vec{b}$ is an offset vector, $W$ is a weight matrix (also referred to as a coefficient), and $\alpha()$ is an activation function. At each layer, the output vector $\vec{y}$ is obtained by performing such a simple operation on the input vector $\vec{x}$. Because there are a large quantity of DNN layers, there are a large quantity of coefficients $W$ and offset vectors $\vec{b}$. Definitions of these parameters in the DNN are as follows: The coefficient $W$ is used as an example. It is assumed that in a three-layer DNN, a linear coefficient from a $4^{th}$ neuron at a $2^{nd}$ layer to a $2^{nd}$ neuron at a $3^{rd}$ layer is defined as $w_{24}^{3}$. The superscript 3 represents the layer where the coefficient $W$ is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that there is no parameter $W$ at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Convolutional neural network

The convolutional neural network (convolutional neuron network, CNN) is a deep neural network with a convolutional structure, and a deep learning (deep learning) architecture. In the deep learning architecture, multi-layer learning is performed at different abstract levels according to a machine learning algorithm. As a deep learning architecture, the CNN is a feed-forward (feed-forward) artificial neural network, and each neuron in the feed-forward artificial neural network may respond to a picture input to the feed-forward artificial neural network. The convolutional neural network includes a feature extractor constituted by a convolutional layer and a pooling layer. The feature extractor may be considered as a filter. A convolution process may be considered as using a trainable filter to perform convolution on an input picture or a convolutional feature plane (feature map).

The convolutional layer is a neuron layer that is in the convolutional neural network and at which convolution processing is performed on an input signal. The convolutional layer may include a plurality of convolution operators. The convolution operator is also referred to as a kernel. In picture processing, the convolution operator functions as a filter that extracts specific information from an input picture matrix. The convolution operator may essentially be a weight matrix, and the weight matrix is usually predefined. In a process of performing a convolution operation on a picture, the weight matrix is usually used to process the input picture at a granularity level of one pixel (or two pixels, depending on a value of a stride (stride)) in a horizontal direction, to extract a specific feature from the picture. A size of the weight matrix should be related to a size of the picture. It should be noted that a depth dimension (depth dimension) of the weight matrix is the same as a depth dimension of the input picture. During a convolution operation, the weight matrix extends to an entire depth of the input picture. Therefore, a convolutional output of a single depth dimension is generated through convolution with a single weight matrix. However, in most cases, a single weight matrix is not used, but a plurality of weight matrices with a same size (rows×columns), namely, a plurality of same-type matrices, are applied. Outputs of the weight matrices are stacked to form a depth dimension of a convolutional picture. The dimension herein may be understood as being determined based on the foregoing "plurality". Different weight matrices may be used to extract different features from the picture. For example, one weight matrix is used to extract edge information of the picture, another weight matrix is used to extract a specific color of the picture, and still another weight matrix is used to blur unnecessary noise in the picture. Sizes of the plurality of weight matrices (rows×columns) are the same. Sizes of feature maps extracted from the plurality of weight matrices with the same size are also the same, and then the plurality of extracted feature maps with the same size are combined to form an output of the convolution operation. Weight values in these weight matrices need to be obtained through a large amount of training in actual application. Each weight matrix including weight values obtained through training may be used to extract information from an input picture, so that the convolutional neural network performs correct prediction. When the convolutional neural network has a plurality of convolutional layers, a relatively large quantity of general features are usually extracted at an initial convolutional layer. The general feature may also be referred to as a low-level feature. As a depth of the convolutional neural network increases, a feature extracted at a subsequent convolutional layer is more complex, for example, a high-level semantic feature. A feature with higher-level semantics is more applicable to a to-be-resolved problem.

A quantity of training parameters often needs to be reduced. Therefore, a pooling layer often needs to be periodically introduced after a convolutional layer. One convolutional layer may be followed by one pooling layer, or a plurality of convolutional layers may be followed by one or more pooling layers. During picture processing, the pooling layer is only used to reduce a space size of the picture. The pooling layer may include an average pooling operator and/or a maximum pooling operator, to perform sampling on the input picture to obtain a picture with a relatively small size. The average pooling operator may be used perform calculation on pixel values in the picture in a specific range, to generate an average value, and the average value is used as an average pooling result. The maximum pooling operator may be used to select a pixel with a maximum value in a specific range as a maximum pooling result. In addition, similar to that the size of the weight matrix at the convolutional layer needs to be related to the size of the picture, an operator at the pooling layer also needs to be related to the size of the picture. A size of a processed picture output from the pooling layer may be less than a size of a picture input to the pooling layer. Each sample in the picture output from the pooling layer represents an average value or a maximum value of a corresponding sub-area of the picture input to the pooling layer.

After processing performed at the convolutional layer/pooling layer, the convolutional neural network is not ready to output required output information, As described above, at the convolutional layer/pooling layer, only a feature is extracted, and parameters resulting from the input picture are reduced. However, to generate final output information (required class information or other related information), the convolutional neural network needs to use the neural network layer to generate an output of one required class or a group of required classes. Therefore, the convolutional neural network layer may include a plurality of hidden layers. Parameters included in the plurality of hidden layers may be obtained through pre-training based on related training data of a specific task type. For example, the task type may include picture recognition, picture classification, and super-resolution picture reconstruction.

Optionally, at the neural network layer, the plurality of hidden layers are followed by the output layer of the entire convolutional neural network. The output layer has a loss function similar to a categorical cross entropy, and the loss function is specifically used to calculate a prediction error. Once forward propagation of the entire convolutional neural network is completed, reverse propagation is started to update a weight value and a deviation of each layer mentioned above, to reduce a loss of the convolutional neural network and an error between a result output by the convolutional neural network by using the output layer and an ideal result.

(4) Recurrent neural network

The recurrent neural network (recurrent neural network, RNN) is used to process sequence data. In a conventional neural network model, layers from an input layer to a hidden layer and then to an output layer are fully connected, and nodes at each layer are not connected. Such a common neural network resolves many problems, but is still incapable of resolving many other problems. For example, to predict a next word in a sentence, a previous word usually needs to be used, because the previous word and the next word in the sentence are not independent. A reason why the RNN is referred to as the recurrent neural network is that a current output of a sequence is also related to a previous output of the sequence. A specific representation form is that the network memorizes previous information and applies the previous information to calculation of the current output. To be specific, nodes at the hidden layer are connected, and an input of the hidden layer not only includes an output of the input layer, but also includes an output of the hidden layer at a previous moment. Theoretically, the RNN can process sequence data of any length. Training for the RNN is the same as training for a conventional CNN or DNN. An error back propagation algorithm is also used, but there is a difference: If the RNN is expanded, a parameter such as W of the RNN is shared. This is different from the conventional neural network described in the foregoing example. In addition, during use of a gradient descent algorithm, an output in each step depends not only on a network in a current step, but also on a network status in several previous steps. The learning algorithm is referred to as a back propagation through time (Back propagation Through Time, BPTT) algorithm.

Why is the recurrent neural network still required when the convolutional neural network is available? A reason is simple. In the convolutional neural network, there is a prerequisite that elements are independent of each other, and input and output are also independent, such as a cat and a dog. However, in the real world, many elements are interconnected. For example, stocks change over time. For another example, a person says: "I love traveling, and my favorite place is Yunnan. I will go there when I have a chance." Herein, people should know that the person will go to "Yunnan". Because people perform inference from the context. However, how do machines do that? Then, the RNN emerges. The RNN is intended to make the machine capable of memorizing like a human. Therefore, an output of the RNN needs to depend on current input information and historical memorized information.

(5) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, that is, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is the loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(6) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

(7) Generative adversarial network

The generative adversarial network (generative adversarial network, GAN) is a deep learning model. The model includes at least two modules: One module is a generative model (Generative Model), and the other module is a discriminative model (Discriminative Model). The two modules are used to learn through gaming with each other, to generate a better output. Both the generative model and the discriminative model may be neural networks, and may specifically be deep neural networks or convolutional neural networks. A basic principle of the GAN is as follows: Using a GAN for generating an image as an example, it is assumed that there are two networks: G (Generator) and D (Discriminator). G is a network for generating an image. G receives random noise z, and generates the image by using the noise, where the picture is denoted as G(z). D is a discriminator network used to determine whether an image is "real". An input parameter of D is x, x represents an image, and an output D(x) represents a probability that x is a real image. If a value of D(x) is 1, it indicates that the image is 100% real. If the value of D(x) is 0, it indicates that the image cannot be real. In a process of training the generative adversarial network, an objective of the generative network G is to generate an image that is as real as possible to deceive the discriminative network D, and an objective of the discriminative network D is to distinguish between the image generated by G and a real image as much as possible. In this way, a dynamic "gaming" process, that is, "adversary" in the "generative adversarial network", exists between G and D. A final gaming result is that in an ideal state, G may generate an image G(z) that is to be difficultly distinguished from a real image, and it is difficult for D to determine whether the image generated by G is real, that is, D(G(z))=0.5. In this way, an excellent generative model G is obtained, and can be used to generate an image.

Before the technical solutions of this application are described, related terms and technologies in this application are first described.

1. Terms

Information is to-be-encoded/decoded data, for example, an image, a video, an audio, or a plain text file.
A symbol is a basic unit of information, for example, samples in an image and characters in a plain text file.
Encoding is a process of converting information into a string of 0s and 1s.

A bitstream is a string of 0s and 1s obtained after information is encoded.

Decoding is a process of restoring information from a bitstream, which is the reverse process of encoding.

A prerequisite is data that is known during encoding/decoding. During encoding/decoding, the length of the bitstream can be reduced based on the prerequisite.

Entropy encoding is encoding according to the Shannon entropy principle without losing information in the encoding process. A probability modeling encoding method is used to make a bitstream length close to the theoretical shortest (Shannon entropy). During entropy encoding, the bitstream length can be reduced based on a prerequisite.

Entropy decoding is the reverse process of entropy encoding by using a probability modeling decoding method. If a prerequisite is used during entropy encoding, the same prerequisite needs to be used during entropy decoding.

Throughput is a quantity of symbols that can be encoded/decoded per second during entropy encoding/decoding.

A register is a memory used by a processor to temporarily store instructions and data. The register has a small capacity and a fast read/write speed. A current computing device usually has 8 to 32 16-bit, 32-bit, or 64-bit registers.

A memory is a main storage unit in a computing device. The memory usually has a much greater capacity than that of a register, and a read/write speed more than 10 times that of a register.

2. Entropy coding methods

(1) Huffman coding (Huffman coding) was introduced in 1952, and is the oldest and most widely used entropy codec. Each symbol is represented by a string of 0s and 1s, and a higher symbol probability indicates a shorter string. At least one bit (bit) is required for coding each symbol. The latest compression algorithms, for example, those for pictures and videos, usually require each symbol to be less than 1 bit. Therefore, Huffman coding is less used in new algorithms. In this case, a sequence of a bitstream is first-in-first-out or first-in-last-out.

(2) Arithmetic coding (Arithmetic Coding, AC) was introduced in 1976 and resolves the 1-bit bottleneck problem through interval allocation. A codeword length can be infinitely close to that of the Shannon entropy, but the encoding/decoding calculation amount is large. In this case, a sequence of a bitstream is first-in-first-out.

(3) An asymmetric digital system (Asymmetric Digital System, ANS) was introduced in 2013, and is another codec whose codeword length is infinitely close to that of the Shannon entropy. Unlike arithmetic coding, the ANS mainly uses integer state transition to implement encoding/decoding. The ANS mainly has two implementations: rANS and tANS. Generally, the ANS can achieve a compression ratio close to that of AC with less calculation. In this case, a sequence of a bitstream is first-in-last-out.

(4) Method for encoding/decoding by skipping some symbols (SKIP): During coding, a probability estimation is performed based on a prerequisite to determine whether to encode/decode each symbol. If a probability that a symbol equals a specific value exceeds a critical value, the symbol is considered to be the value, and the symbol is not encoded/decoded. SKIP can reduce a coding length and improve a speed. However, a few symbols in the decoded information are inconsistent with the original information. Therefore, SKIP is applicable only to lossy compression.

(5) Two-stage encoding/decoding method (INBOUND+OUTBOUND) for long-tail data

The following two methods are used to encode symbols:

A. First-in-first-out bitstream

    i. If a symbol is a first symbol, the symbol is replaced with a specific flag value (for example, 2). Long-tail data usually has a low probability (the probability may be a probability of a specific value (for example, 0 or 1)), but a large data range (also referred to as a data amount).

    ii. INBOUND encoding: Probability modeling is performed on both non-long-tail symbols and the flag value of the first symbol, and then encoding is performed.

    iii. OUTBOUND encoding: For the first symbol, a long-tail encoding method is used to encode the first symbol.

B. First-in-last-out bitstream

    i. If a symbol is a first symbol, OUTBOUND encoding is performed: For the first symbol, the long-tail encoding method is used to encode the first symbol, and the first symbol is replaced with a specific flag value (for example, 2).

    ii. INBOUND encoding: Probability modeling is performed on non-long-tail symbols and the flag value of the first symbol, and then encoding is performed.

When the bitstream is being decoded, the INBOUND coding is performed first, and then the OUTBOUND coding is performed.

> i. INBOUND decoding: Probability modeling is performed on both non-long-tail symbols and the flag value of the first symbol, and then decoding is performed.
> ii. OUTBOUND decoding: For the first symbol, a long-tail decoding method is used to decode the bitstream.

This method can effectively reduce a coding length.

3. Entropy coding

In a common entropy coding (entropy coding) technology, encoding processing mainly includes two steps: (1) For each symbol, determine a probability model of the symbol based on context information, which is usually referred to as a context model. (2) Encode the symbol based on a probability value in the context model. Correspondingly, decoding processing mainly includes three steps: (1) For each symbol, determine a context model of the symbol based on context information. (2) Decode the bitstream of the symbol based on a probability value in the context model.

Statistically, a symbol closer to a uniform distribution requires more bits for encoding the symbol, and a symbol closer to a constant requires fewer bits for encoding the symbol. If a group of probability models are selected as context models from a plurality of probability models based on context information, a total probability that a symbol is 1 may be divided into conditional probabilities that the symbol is 1 in a plurality of cases, where each conditional probability may be closer to 0 or 1 in comparison with the total probability, so that fewer bits are encoded and entropy coding efficiency is improved.

In view of this, this application provides an entropy encoding/decoding method and apparatus, to reduce time consumption for memory read/write and improve the encoding/decoding efficiency.

FIG. 6 is a flowchart of a process 600 of an entropy encoding method according to an embodiment of this application. The process 600 may be performed by an electronic device used as an encoder side, for example, a computer or a server, or may be performed by a chip in the foregoing electronic device, for example, by the foregoing video encoder 20. The process 600 is described as a series of steps or operations. It should be understood that the process 600 may be performed in various sequences and/or simultaneously, and is not limited to an execution sequence shown in FIG. 6. The process 600 may include the following steps.

Step 601: Obtain a plurality of symbols of a to-be-processed object.

In this application, the to-be-processed object may include several forms:

> (1) a file type or a storage standard, for example, an image, a video, and an audio;
> (2) a data transmission protocol, for example, an online video, live streaming, and device-cloud collaborative content; and
> (3) a compression software or storage device, for example, audio/video compression software.

It should be noted that, in addition to the foregoing forms, the to-be-processed object in this application may further include another form. A common point of the forms is that an entropy encoding/decoding technology is related thereto. Therefore, the to-be-processed object is not specifically limited in this application.

The to-be-processed object may include symbols. For example, a video includes a frame sequence, and each frame includes a plurality of pixels. In this case, a symbol of the video may be a pixel. For another example, a plain text file includes a plurality of characters (which may be Chinese characters, letters, numerals, or the like). In this case, a symbol of the plain text file may be a character. A symbol is a basic unit of information (to-be-encoded/decoded data).

Step 602: Group the plurality of symbols, where a quantity of symbols in each group is N.

The to-be-processed object may include many symbols. If these symbols are encoded together, related data can only be stored in and read from a memory during encoding due to limited space of a register. However, a plurality of memory reads/writes on the memory increase time consumption. Therefore, to reduce the time consumption and improve the coding efficiency, these symbols may be grouped, so that a quantity of symbols in one group is reduced, and a subsequent step is performed in group.

In this application, one group includes N symbols, where N is an integer greater than 1. For example, N=2, 4, 5, or 8. Every N symbols in these symbols may be sequentially grouped into one group based on indexes of the symbols. If a bitstream is first-in-first-out, grouping may be performed on the symbols in ascending order of indexes. If a bitstream is first-in-last-out, grouping may be performed on the symbols in descending order of indexes. Optionally, all symbols may be obtained at a time and then grouped, or one or more symbols may be grouped into one group once being obtained. This is not specifically limited in this application.

Step 603: Obtain M symbols from a current group.

The current group may be a group that is currently under processing by the encoder side during encoding, that is, a group that is currently being processed by the encoder side. In a period from a 1st symbol of a group to an Nth symbol of the group, the group may be referred to as the current group. According to descriptions in step 602, the current group includes N symbols.

In a possible implementation, the M symbols are symbols on which a coding operation is not skipped in N symbols in the current group.

In view of this, the M symbols may include the following several cases:

(1) $1 \leq M < N$, indicating that a coding operation is not skipped on a part (one or more) of the symbols in the current group. Therefore, the M symbols are the part (one or more) of the symbols in the current group. Correspondingly, a coding operation is skipped on N-M symbols other than the M symbols in the current group.

(2) M=N, indicating that a coding operation is not skipped on every (N) of the symbols in the current group. Therefore, the M symbols are all the symbols in the current group. Correspondingly, a coding operation is skipped on none of the symbols in the current group.

(3) M=0, indicating that a coding operation is skipped on all (N) of the symbols in the current group. Therefore, there is no M symbol, and in this case, encoding on the current group ends, and there is no need to perform steps 603 and 604.

Optionally, the encoder side may determine, based on a prerequisite (that is, data that is known during encoding/decoding, for example, a syntax element), whether a coding operation is skipped on each of the N symbols in the current group. This is a symbol-level operation.

Step 604: Encode the M symbols to obtain a bitstream.

A first symbol may be a symbol that meets a preset condition and that is in the plurality of symbols of the to-be-processed object. The preset condition may include a low probability and a large quantity. For example, if a probability of a symbol is lower than a probability threshold, and a proportion of such symbols in all symbols is greater than a proportion threshold, the symbol may be determined as the first symbol. The probability may be a probability that a value of the symbol is a specific value (for example, 0 or 1). For details, refer to the technical descriptions of entropy encoding.

The bitstream includes two cases: first-in-last-out and first-in-first-out. A decoder side usually performs decoding in a first decoding manner before decoding in a second decoding manner. Therefore, to ensure correct decoding by the decoder side, the encoder side may determine an encoding order in the two cases of the bitstream. To be specific, in the first-in-first-out case, the encoder side first performs encoding in the first encoding manner and then performs encoding in the second encoding manner; or in the first-in-last-out case, the encoder side first performs encoding in the second encoding manner and then first performs encoding in the first encoding manner. Optionally, the foregoing first encoding may be INBOUND encoding described above, and the foregoing second encoding may be OUTBOUND encoding described above. It should be noted that an encoder for the first symbol in OUTBOUND encoding is not specifically limited, and an encoder for a second symbol (a symbol that does not meet the preset condition in the plurality of symbols of the to-be-processed object) and/or the preset value in INBOUND encoding is not specifically limited. The encoders for the two symbols may be the same or different.

In a possible implementation, the M symbols include one or more first symbols that meet a preset condition, and in this case, the first symbol in the M symbols is replaced with a preset value to obtain M processed symbols; the M processed symbols are encoded in a first encoding manner to obtain a first bitstream; the one or more first symbols are encoded in a second encoding manner to obtain a second bitstream; and the bitstream is formed based on the first bitstream and the second bitstream.

This case corresponds to the first-in-first-out bitstream. The first symbol in the M symbols may be first replaced with the preset value (for example, 2) to obtain the M processed symbols. In this way, a second symbol in the M processed symbols still retains an original value, and the first symbol becomes the preset value. If there are a plurality of first symbols in the M symbols, the encoder side may replace all the plurality of first symbols with the preset value.

Then, the M processed symbols are encoded in the first encoding manner to obtain the first bitstream. The encoder side may encode the M processed symbols together in the first encoding manner, so that the first bitstream can be written into a register at a time, thereby avoiding a waste of space of the register. If the space of the register is insufficient, the first bitstream is flushed (flush).

Then, the first symbol is encoded in the second encoding manner to obtain the second bitstream. If there are the plurality of first symbols in the M symbols, the encoder side may encode the plurality of first symbols together in the second encoding manner. In this way, the second bitstream may be written into a register at a time, thereby avoiding a waste of space of the register. If the space of the register is insufficient, the second bitstream is flushed (flush).

In a possible implementation, the M symbols include one or more first symbols that meet a preset condition, and in this case, the one or more first symbols are encoded in a second encoding manner to obtain a third bitstream; the first symbol in the M symbols is replaced with a preset value to obtain M processed symbols; the M processed symbols are encoded in a first encoding manner to obtain a fourth bitstream; and the bitstream is formed based on the third bitstream and the fourth bitstream.

This case corresponds to the first-in-last-out bitstream. The first symbol in the M symbols may be first encoded in the second encoding manner to obtain the third bitstream. If there are the plurality of first symbols in the M symbols, the encoder side may encode the plurality of first symbols together in the second encoding manner. In this way, the third bitstream may be written into a register at a time, thereby avoiding a waste of space of the register. If the space of the register is insufficient, the third bitstream is flushed (flush).

Then, the first symbol is first replaced with the preset value (for example, 2) to obtain the M processed symbols. In this way, a second symbol in the M processed symbols still retains an original value, and the first symbol becomes the preset value.

Then, the M processed symbols are encoded in the first encoding manner to obtain the fourth bitstream. The encoder side may encode the M processed symbols together in the first encoding manner, so that the fourth bitstream can be written into a register at a time, thereby avoiding a waste of space of the register. If the space of the register is insufficient, the first bitstream is flushed (flush).

For example, a maximum of 17 bits of a bitstream can be written into a register through first encoding, and a maximum of 8 bits of bitstream can be written into the register through second encoding. If the register is 32-bit, a flush is required after each character is encoded. If the register is 64-bit, a flush is required after every two characters are encoded. Time consumption increases as a quantity of memory read operations increases. When N=4, if the register is 32-bit, first encoding and second encoding are performed on four symbols together. This is equivalent to that only one flush is required every fourth time second encoding is performed, and one flush is required every time first encoding is performed. When a probability of the first symbol is low (for example, lower than 1%), an average quantity of flushes for every four symbols is 1.04, which is significantly less than the foregoing four flushes, and a quantity of memory operations is significantly reduced.

In addition, when the M symbols do not include the first symbol, the M symbols are encoded in a first encoding manner to obtain the bitstream. That is, as the M symbols do not include the first symbol, the first symbol does not need to be replaced with the preset value, and the M symbols can be directly encoded in the first encoding manner.

In this embodiment, N symbols in each group (obtained by grouping the symbols of the to-be-processed object) are encoded (including in a first encoding manner and a second encoding manner), to reduce a quantity of memory reads/writes and improve coding efficiency.

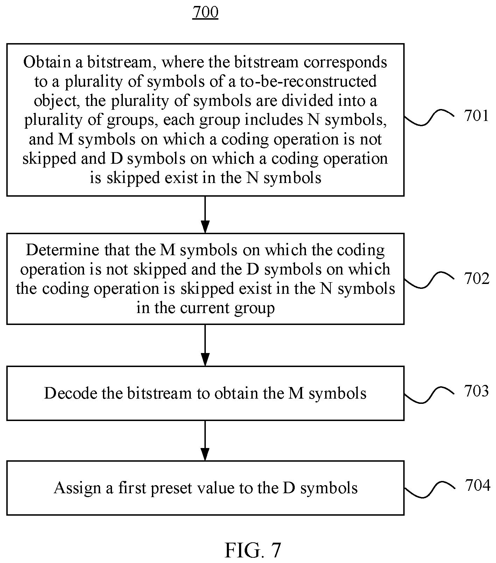

FIG. 7 is a flowchart of a process 700 of an entropy decoding method according to an embodiment of this application. The process 700 may be performed by an electronic device used as a decoder side, for example, a computer or a terminal, or may be performed by a chip in the foregoing electronic device, for example, by the foregoing video decoder 30. The process 700 is described as a series of steps or operations. It should be understood that the process 700 may be performed in various sequences and/or simultaneously, and is not limited to an execution sequence shown in FIG. 7. The process 700 may include the following steps.

Step 701: Obtain a bitstream, where the bitstream corresponds to a plurality of symbols of a to-be-reconstructed object, the plurality of symbols are divided into a plurality of groups, each group includes N symbols, and M symbols on which a coding operation is not skipped and D symbols on which a coding operation is skipped exist in the N symbols.

The decoder side may receive all bitstreams before decoding, or may decode bitstreams while receiving bitstreams. This is not specifically limited. The decoder side can learn, based on a prerequisite in a bitstream (that is, data that is known during encoding/decoding, for example, a syntax element), how many bits of the bitstream correspond to one symbol. Therefore, the decoder side can obtain a bitstream corresponding to N symbols for subsequent processing.

Corresponding to an encoder side, the decoder side may also have a concept of group. One group includes N symbols, where N is an integer greater than 1. For example, N=2, 4, 5, or 8.

The decoder side may determine, based on a prerequisite (that is, data that is known during encoding/decoding, for example, a syntax element), on which symbols in the N symbols in each group a coding operation is skipped, and on which symbols a coding operation is not skipped. This is a symbol-level operation. The decoder side determines, based on the foregoing operation, that M symbols on which a coding operation is not skipped and D symbols on which a coding operation is skipped exist in the N symbols, where $1 \leq M \leq N$, and M+D=N.

Step 702: Decode the bitstream to obtain the M symbols.

In this application, the bitstream may be decoded in the first decoding manner to obtain M unprocessed symbols; when the M unprocessed symbols include M' second preset values, the bitstream is decoded in the second decoding manner to obtain M' symbols (corresponding to first symbols and meeting a preset condition), where $1 \leq M' \leq M$; the M' second preset values in the M unprocessed symbols are replaced with the M' symbols to obtain M processed symbols (including the first symbols and second symbols (not meeting the preset condition)); the M processed symbols are used as the M symbols; or when the M unprocessed symbols do not include M' second preset values, the M unprocessed symbols are used as the M symbols.

Optionally, the first decoding manner may be INBOUND decoding described above, and the second decoding manner may be OUTBOUND decoding described above. It should be noted that a decoder for the bitstream in OUTBOUND decoding is not specifically limited, and a decoder for the bitstream in INBOUND decoding is not specifically limited. The two decoders may be the same or different.

The preset condition may include a low probability and a large quantity. For example, a probability of a symbol is lower than a probability threshold, and a proportion of such symbols in all symbols exceeds a proportion threshold.

The decoder side decodes the bitstream in the first decoding manner to obtain the M unprocessed symbols. The M unprocessed symbols may include only the second symbols. In this case, the M unprocessed symbols are the M symbols, step 702 may end, and the following step 703 is performed. The decoder side may decode a bitstream of the M unprocessed symbols together in the first decoding manner, so that the bitstream can be written into a register at a time, thereby avoiding a waste of space of the register. If the space of the register is insufficient, the bitstream is flushed (flush).

The M unprocessed symbols may also include the second symbols and the M' second preset values. In this case, the decoder side further decodes the bitstream in the second decoding manner to obtain the M' symbols. The M' symbols are original values of first symbols in original M symbols. The decoder side may replace the M' second preset values with the M' symbols, to obtain the M symbols. The decoder side may decode a bitstream of the M' symbols together in the second decoding manner, so that the bitstream can be written into a register at a time, thereby avoiding a waste of space of the register. If the space of the register is insufficient, the bitstream is flushed (flush).

Step 703: Set the D symbols to a first preset value.

For values of M and D, the following cases may be included:

(1) M=N, and D=0, indicating that a coding operation is skipped on none of the N symbols. Therefore, all the M (namely, N) symbols can be obtained based on the bitstream, and step 703 is not performed in this case.

(2) 1≤M<N, and D>0, indicating that a coding operation is not skipped on a part of the N symbols, and a coding operation is skipped on the other part of the N symbols. Therefore, the M symbols can be obtained based on the bitstream, and the remaining D symbols may be obtained by performing step 703.

(3) M=0, and D=N, indicating that a coding operation is skipped on all the N symbols, and the N symbols do not need to be obtained based on the bitstream. In this case, step 702 is skipped, and step 703 is directly performed.

In view of this, D>0, indicating that the current group includes a symbol (namely, the D symbols) on which a coding operation is skipped. Therefore, the D symbols can be set to the first preset value (for example, 0 or - 1) to reconstruct all the symbols in the current group.

In this embodiment, a bitstream of N symbols in each group (obtained by grouping the symbols of the to-be-processed object) are decoded (including in a first decoding manner and a second decoding manner), to reduce a quantity of memory reads/writes and improve coding efficiency.

The following uses several specific embodiments to describe in detail the technical solutions of the method embodiments shown in FIG. 6 and FIG. 7.

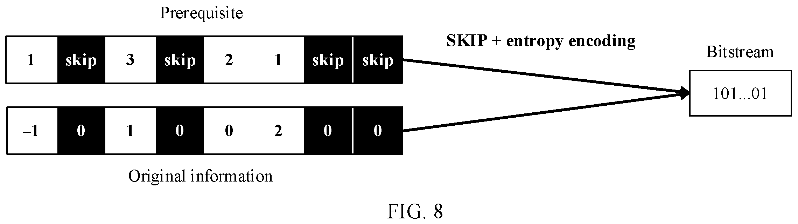

FIG. 8 is a flowchart after integration of coding operation skipping and encoding according to this application. As shown in FIG. 8, an encoder side performs the following steps.

1. Before encoding, a prerequisite (data that is known during encoding/decoding) and original information (to-be-encoded data) are included. For example, Table 1 shows examples of prerequisites, original information, and correspondences between the prerequisites and the original information.

Table 1

| Sequence number | 1 | 2 | 3 | 4 | 5 | 6 | 7 | 8 |
|---|---|---|---|---|---|---|---|---|
| Prerequisite | 1 | skip | 3 | skip | 2 | 1 | skip | skip |
| Original information | -1 | 0 | 1 | 0 | 0 | 2 | 0 | 0 |

As shown in Table 1, the prerequisites include 1, skip, 3, skip, 2, 1, skip, and skip, and the original information includes symbols -1, 0, 1, 0, 0, 2, 0, and 0. The prerequisite in each column corresponds to the original information. When the prerequisite is skip, it indicates that a coding operation is skipped for the original information corresponding to the prerequisite. For ease of description, a sequence number row is added. The sequence number row does not belong to the to-be-encoded information. For example, if the sequence number is 2 and the prerequisite is skip, a coding operation is skipped for the corresponding original information (0); if the sequence number is 4 and the prerequisite is skip, a coding operation is skipped for the corresponding original information (0); if the sequence number is 7 and the prerequisite is skip, a coding operation is skipped for the corresponding original information (0); and if the sequence number is 8 and the prerequisite is skip, a coding operation is skipped for the corresponding original information (0).

2. In this embodiment, a current group includes eight (N=8) symbols (-1, 0, 1, 0, 0, 2, 0, 0), and after a coding operation is skipped (SKIP) on the symbols whose sequence numbers are 2, 4, 7, and 8 in the eight symbols in Table 1, four (M=4) symbols (-1, 1, 0, 2) are obtained.

3. Encode the four symbols to obtain a bitstream.

It is assumed that in the four symbols, 2 is a first symbol, -1, 1, and 0 are second symbols. An encoding process includes the following steps.

(1) Replace 2 with 3 (a preset value) to obtain four processed symbols (-1, 1, 0, and 3).
(2) Encode the four processed symbols in an INBOUND encoding manner to obtain a first bitstream.
(3) Encode 2 in an OUTBOUND encoding manner to obtain a second bitstream.
(4) Form the bitstream (101...01) based on the first bitstream and the second bitstream.

Another encoding process includes the following steps.

(1) Encode 2 in an OUTBOUND encoding manner to obtain a third bitstream.
(2) Replace 2 with 3 (a preset value) to obtain four processed symbols (-1, 1, 0, and 3).
(3) Encode the four processed symbols in an INBOUND encoding manner to obtain a fourth bitstream.
(4) Form the bitstream (101...01) based on the third bitstream and the fourth bitstream.

4. Write the bitstream into a memory.

In this embodiment, the results of steps 1 to 3 do not need to be stored, and coding operation skipping (SKIP) and encoding can be directly performed. Compared with the related technologies, this requires reading the memory only once for each of the prerequisite and the original information, and the bitstream is written into the memory once.

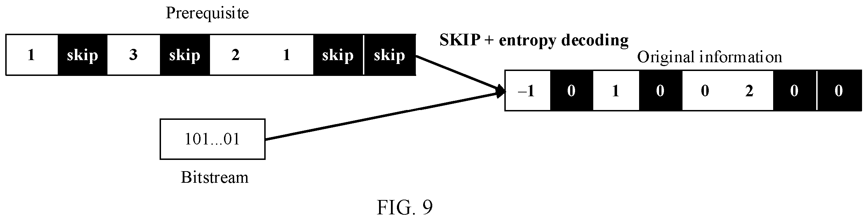

FIG. 9 is a flowchart after integration of coding operation skipping and decoding according to this application. As shown in FIG. 9, a decoder side performs the following steps.

1. Before decoding, a prerequisite (data that is known during encoding/decoding) and a bitstream (101...01) are included. The prerequisite includes 1, skip, 3, skip, 2, 1, skip, and skip. The prerequisite and the bitstream are consistent with those in the embodiment shown in FIG. 8.

2. Decode the bitstream to obtain eight symbols in a current group:

(1) Decode the bitstream in an INBOUND decoding manner to obtain four unprocessed symbols (-1, 1, 0, and 3).
(2) As the four unprocessed symbols include a preset value 3, decode the bitstream in an OUTBOUND decoding manner to obtain 2.
(3) Replace 3 in the four unprocessed symbols with 2 to obtain four symbols (-1, 1, 0, and 2).
(4) Based on the prerequisite, it can be learned that in the current group, a coding operation is skipped on four symbols (whose sequence numbers are respectively 2, 4, 7, and 8). The four symbols are set to (that is, assigned) a preset value 0, to obtain eight symbols (-1, 0, 1, 0, 0, 2, 0, and 0), which are consistent with the original information in the embodiment shown in FIG. 8.

In this embodiment, the results of steps 1 to 3 do not need to be stored, and decoding and reverse SKIP can be directly performed. Compared with the related technologies, this requires reading the memory once for the bitstream, and the prerequisite and the original information each are written into the memory once.

Table 2 shows comparison between throughput of Intel i7-1260P CPU in the related technology and in this application. It can be learned that encoding/decoding throughput in this application is increased by 1.5 times on average, and in particular, can be increased by up to 2 times when a SKIP probability is low.

Table 2

| Method | SKIP probability | Encoding throughput (Msymbol/s) | Decoding throughput (Msymbol/s) |
|---|---|---|---|
| Related technology | 0.3 | 223.2 | 186.4 |
| | 0.5 | 205.2 | 164.3 |
| | 0.7 | 272.2 | 243.2 |
| | 0.9 | 619 | 515.1 |

(continued)

| Method | SKIP probability | Encoding throughput (Msymbol/s) | Decoding throughput (Msymbol/s) |
|---|---|---|---|
| This application | 0.3 | 363.4 | 363.7 |
| | 0.5 | 361.2 | 349.7 |
| | 0.7 | 454.1 | 440.3 |
| | 0.9 | 598.9 | 609.9 |

Encoder side

If a sequence of a bitstream is first-in-last-out, every four symbols are grouped into one group, and the following operations are performed on the group:

For each symbol, if it is determined, based on the prerequisite, that a coding operation is not skipped on the symbol and the symbol is a first symbol, OUTBOUND encoding is performed on the symbol (and another same-type symbol in the four symbols), and the symbol is changed to a flag value.

For each symbol, if it is determined, based on the prerequisite, that a coding operation is not skipped on the symbol and the symbol is a second symbol, INBOUND encoding is performed on the symbol (and another same-type symbol and a flag value in the four symbols).

If a sequence of a bitstream is first-in-first-out, every four symbols are grouped into one group, and the following operations are performed on the group:

For each symbol, if it is determined, based on the prerequisite, that a coding operation is not skipped on the symbol and the symbol is a first symbol, the symbol is changed to a flag value, and INBOUND encoding is performed on the flag value (and another same-type flag value and a second symbol in the four symbols).

For each symbol, if it is determined, based on the prerequisite, that a coding operation is not skipped on the symbol and the symbol is long-tail, OUTBOUND encoding is performed on the symbol (and another same-type symbol in the four symbols).

Optionally, a quantity of symbols in each group may be a different constant based on a different quantity of registers, a different bit width, and a different quantity of OUTBOUND/INBOUND bits.

Decoder side

Every four symbols in to-be-decoded information are grouped in a group, and the following operations are performed on the group:

For each symbol, if it is determined, based on the prerequisite, that a coding operation is skipped on the symbol, the symbol is set to (that is, assigned) a constant. Otherwise, INBOUND decoding is performed on the symbol.

For each symbol, if it is determined, based on the prerequisite, that a coding operation is not skipped on the symbol, and a value of the symbol obtained through decoding in the previous step is a flag value, OUTBOUND decoding is performed on the symbol, and the flag value is replaced.

Optionally, a quantity of symbols in each group may be a different constant based on a different quantity of registers, a different bit width, and a different quantity of OUTBOUND/INBOUND bits.

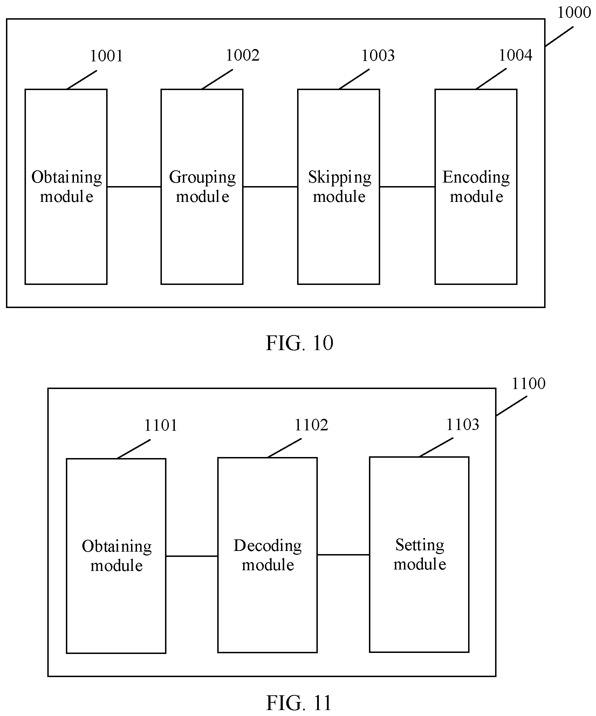

FIG. 10 is a diagram of a structure of an entropy encoding apparatus 1000 according to this application. As shown in FIG. 10, the entropy encoding apparatus 1000 in this embodiment may be applied to the foregoing electronic device on the encoder side. The entropy encoding apparatus 1000 may include an obtaining module 1001, a grouping module 1002, a skipping module 1003, and an encoding module 1004.

The obtaining module 1001 is configured to obtain a plurality of symbols of a to-be-processed object. The grouping module 1002 is configured to group the plurality of symbols, where a quantity of symbols in each group is N, and 1<N. The skipping module 1003 is configured to obtain M symbols from a current group, where 1≤M≤N. The encoding module 1004 is configured to encode the M symbols to obtain a bitstream.

In a possible implementation, the M symbols include one or more first symbols that meet a preset condition, and the encoding module 1004 is specifically configured to: replace the first symbol in the M symbols with a preset value to obtain M processed symbols; encode the M processed symbols in a first encoding manner to obtain a first bitstream; encode the one or more first symbols in a second encoding manner to obtain a second bitstream; and form the bitstream based on the first bitstream and the second bitstream.

In a possible implementation, the M symbols include one or more first symbols that meet a preset condition, and the encoding module 1004 is specifically configured to: encode the one or more first symbols in a second encoding manner to obtain a third bitstream; replace the first symbol in the M symbols with a preset value to obtain M processed symbols;

encode the M processed symbols in a first encoding manner to obtain a fourth bitstream; and form the bitstream based on the third bitstream and the fourth bitstream.

In a possible implementation, the M symbols do not include a first symbol that meets a preset condition, and the encoding module 1004 is specifically configured to encode the M symbols in a first encoding manner to obtain the bitstream.

In a possible implementation, the preset condition includes that a probability of the first symbol is lower than a probability threshold, and a proportion of the first symbols in the plurality of symbols exceeds a proportion threshold.

In a possible implementation, the M symbols are symbols on which a coding operation is not skipped in N symbols in the current group.

In a possible implementation, N=4.

The apparatus in this embodiment may be configured to perform the technical solution in the method embodiment shown in FIG. 6. Implementation principles and technical effect thereof are similar. Details are not described herein again.

FIG. 11 is a diagram of a structure of an entropy decoding apparatus 1100 according to this application. As shown in FIG. 11, the entropy decoding apparatus 1100 in this embodiment may be applied to the foregoing electronic device on the decoder side. The entropy decoding apparatus 1100 may include an obtaining module 1101, a decoding module 1102, and a setting module 1103.

The obtaining module 1101 is configured to obtain a bitstream, where the bitstream corresponds to a plurality of symbols of a to-be-reconstructed object, the plurality of symbols are divided into a plurality of groups, each group includes N symbols, M symbols on which a coding operation is not skipped and D symbols on which a coding operation is skipped exist in the N symbols, $1<N$, $1 \leq M \leq N$, and M+D=N. The decoding module 1102 is configured to decode the bitstream to obtain the M symbols. The setting module 1103 is configured to set the D symbols to a first preset value.

In a possible implementation, the decoding module 1102 is specifically configured to: decode the bitstream in a first decoding manner to obtain M unprocessed symbols; when the M unprocessed symbols include M' second preset values, decode the bitstream in a second decoding manner to obtain M' symbols, where $1 \leq M' \leq M$; replace the M' second preset values in the M unprocessed symbols with the M' symbols to obtain M processed symbols; and use the M processed symbols as the M symbols; or when the M unprocessed symbols do not include M' second preset values, use the M unprocessed symbols as the M symbols.

In a possible implementation, N=4.

The apparatus in this embodiment may be configured to perform the technical solution in the method embodiment shown in FIG. 7. Implementation principles and technical effect thereof are similar. Details are not described herein again.

In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in the foregoing embodiments may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An entropy encoding method, comprising:

   obtaining a plurality of symbols of a to-be-processed object;
   grouping the plurality of symbols, wherein a quantity of symbols in each group is N, and 1<N;
   obtaining M symbols from a current group, wherein $1 \leq M \leq N$; and
   encoding the M symbols to obtain a bitstream.

2. The method according to claim 1, wherein the M symbols comprise one or more first symbols that meet a preset condition, and encoding the M symbols to obtain the bitstream comprises:

   replacing the first symbol in the M symbols with a preset value to obtain M processed symbols;
   encoding the M processed symbols in a first encoding manner to obtain a first bitstream;
   encoding the one or more first symbols in a second encoding manner to obtain a second bitstream; and
   forming the bitstream based on the first bitstream and the second bitstream.

3. The method according to claim 1, wherein the M symbols comprise one or more first symbols that meet a preset condition, and encoding the M symbols to obtain the bitstream comprises:

   encoding the one or more first symbols in a second encoding manner to obtain a third bitstream;

replacing the first symbol in the M symbols with a preset value to obtain M processed symbols;
encoding the M processed symbols in a first encoding manner to obtain a fourth bitstream; and
forming the bitstream based on the third bitstream and the fourth bitstream.

4. The method according to claim 1, wherein the M symbols do not comprise a first symbol that meets a preset condition, and encoding the M symbols to obtain the bitstream comprises:
encoding the M symbols in a first encoding manner to obtain the bitstream.

5. The method according to any one of claims 2 to 4, wherein the preset condition comprises that a probability of the first symbol is lower than a probability threshold, and a proportion of the first symbols in the plurality of symbols exceeds a proportion threshold.

6. The method according to any one of claims 1 to 5, wherein the M symbols are symbols on which a coding operation is not skipped in N symbols in the current group.

7. The method according to any one of claims 1 to 6, wherein N=4.

8. An entropy decoding method, comprising:

obtaining a bitstream, wherein the bitstream corresponds to a plurality of symbols of a to-be-reconstructed object, the plurality of symbols are divided into a plurality of groups, each group comprises N symbols, M symbols on which a coding operation is not skipped and D symbols on which a coding operation is skipped exist in the N symbols, $1<N$, $1\leq M\leq N$, and $M+D=N$;
decoding the bitstream to obtain the M symbols; and
setting the D symbols to a first preset value.

9. The method according to claim 8, wherein decoding the bitstream to obtain the M symbols comprises:

decoding the bitstream in a first decoding manner to obtain M unprocessed symbols;
when the M unprocessed symbols comprise M' second preset values, decoding the bitstream in a second decoding manner to obtain M' symbols, wherein $1\leq M'\leq M$;
replacing the M' second preset values in the M unprocessed symbols with the M' symbols to obtain M processed symbols; and
using the M processed symbols as the M symbols; or
when the M unprocessed symbols do not comprise M' second preset values, using the M unprocessed symbols as the M symbols.

10. The method according to claim 8 or 9, wherein N=4.

11. An entropy encoding apparatus, comprising:

an obtaining module, configured to obtain a plurality of symbols of a to-be-processed object;
a grouping module, configured to group the plurality of symbols, wherein a quantity of symbols in each group is N, and $1<N$;
a skipping module, configured to obtain M symbols from a current group, wherein $1\leq M\leq N$; and
an encoding module, configured to encode the M symbols to obtain a bitstream.

12. The apparatus according to claim 11, wherein the M symbols comprise one or more first symbols that meet a preset condition, and the encoding module is specifically configured to: replace the first symbol in the M symbols with a preset value to obtain M processed symbols; encode the M processed symbols in a first encoding manner to obtain a first bitstream; encode the one or more first symbols in a second encoding manner to obtain a second bitstream; and form the bitstream based on the first bitstream and the second bitstream.

13. The apparatus according to claim 11, wherein the M symbols comprise one or more first symbols that meet a preset condition, and the encoding module is specifically configured to: encode the one or more first symbols in a second encoding manner to obtain a third bitstream; replace the first symbol in the M symbols with a preset value to obtain M processed symbols; encode the M processed symbols in a first encoding manner to obtain a fourth bitstream; and form the bitstream based on the third bitstream and the fourth bitstream.

14. The apparatus according to claim 11, wherein the M symbols do not comprise a first symbol that meets a preset condition, and the encoding module is specifically configured to encode the M symbols in a first encoding manner to obtain the bitstream.

15. The apparatus according to any one of claims 12 to 14, wherein the preset condition comprises that a probability of the first symbol is lower than a probability threshold, and a proportion of the first symbols in the plurality of symbols exceeds a proportion threshold.

16. The apparatus according to any one of claims 11 to 15, wherein the M symbols are symbols on which a coding operation is not skipped in N symbols in the current group.

17. The apparatus according to any one of claims 11 to 16, wherein N=4.

18. An entropy decoding apparatus, comprising:

an obtaining module, configured to obtain a bitstream, wherein the bitstream corresponds to a plurality of symbols of a to-be-reconstructed object, the plurality of symbols are divided into a plurality of groups, each group comprises N symbols, M symbols on which a coding operation is not skipped and D symbols on which a coding operation is skipped exist in the N symbols, $1<N$, $1\leq M\leq N$, and M+D=N;
a decoding module, configured to decode the bitstream to obtain the M symbols; and
a setting module, configured to set the D symbols to a first preset value.

19. The apparatus according to claim 18, wherein the decoding module is specifically configured to: decode the bitstream in a first decoding manner to obtain M unprocessed symbols; when the M unprocessed symbols comprise M' second preset values, decode the bitstream in a second decoding manner to obtain M' symbols, wherein $1\leq M'\leq M$; replace the M' second preset values in the M unprocessed symbols with the M' symbols to obtain M processed symbols; and use the M processed symbols as the M symbols; or when the M unprocessed symbols do not comprise M' second preset values, use the M unprocessed symbols as the M symbols.

20. The apparatus according to claim 18 or 19, wherein N=4.

21. An encoder, comprising a processing circuit, configured to perform the method according to any one of claims 1 to 7.

22. A decoder, comprising a processing circuit, configured to perform the method according to any one of claims 8 to 10.

23. A computer program product, wherein the computer program product comprises computer program code, and when the computer program code is run on a computer, the computer is enabled to perform the method according to any one of claims 1 to 10.

24. A non-transitory computer-readable storage medium, comprising a bitstream obtained by using the entropy encoding method according to any one of claims 1 to 7.

25. An encoder, comprising:

one or more processors; and
a non-transitory computer-readable storage medium coupled to the processor and storing a program determined by the processor, wherein when the program is determined by the processor, the encoder is enabled to perform the method according to any one of claims 1 to 7.

26. A decoder, comprising:

one or more processors; and
a non-transitory computer-readable storage medium, coupled to the processor and storing a program determined by the processor, wherein when the program is determined by the processor, the decoder is enabled to perform the method according to any one of claims 8 to 10.

27. A picture or audio processor, comprising a processing circuit, configured to perform the method according to any one of claims 1 to 10.

FIG. 1a

EP 4 783 576 A1

FIG. 1b

FIG. 2

FIG. 3

FIG. 4

500

FIG. 5

600

FIG. 6

<u>700</u>

```
┌─────────────────────────────────────────┐
│ Obtain a bitstream, where the bitstream  │
│ corresponds to a plurality of symbols    │
│ of a to-be-reconstructed object, the     │
│ plurality of symbols are divided into a  │        701
│ plurality of groups, each group includes │  ⌇
│ N symbols, and M symbols on which a      │
│ coding operation is not skipped and D    │
│ symbols on which a coding operation is    │
│ skipped exist in the N symbols           │
└─────────────────────────────────────────┘
```

```
┌─────────────────────────────────────────┐
│ Determine that the M symbols on which the│
│ coding operation is not skipped and the D│        702
│ symbols on which the coding operation is │  ⌇
│ skipped exist in the N symbols in the    │
│ current group                            │
└─────────────────────────────────────────┘
```

```
┌─────────────────────────────────────────┐
│ Decode the bitstream to obtain the M     │        703
│ symbols                                  │  ⌇
└─────────────────────────────────────────┘
```

```
┌─────────────────────────────────────────┐
│ Assign a first preset value to the D     │        704
│ symbols                                  │  ⌇
└─────────────────────────────────────────┘
```

FIG. 7

Prerequisite

| 1 | skip | 3 | skip | 2 | 1 | skip | skip |
| --- | --- | --- | --- | --- | --- | --- | --- |

**SKIP + entropy encoding**

Bitstream

| 101...01 |
| --- |

| -1 | 0 | 1 | 0 | 0 | 2 | 0 | 0 |
| --- | --- | --- | --- | --- | --- | --- | --- |

Original information

FIG. 8

Prerequisite

| 1 | skip | 3 | skip | 2 | 1 | skip | skip |

**SKIP + entropy decoding**

Original information

| −1 | 0 | 1 | 0 | 0 | 2 | 0 | 0 |

| 101...01 |

Bitstream

FIG. 9

1000

| 1001 | 1002 | 1003 | 1004 |
| --- | --- | --- | --- |
| Obtaining module | Grouping module | Skipping module | Encoding module |

FIG. 10

1100

| 1101 | 1102 | 1103 |
| --- | --- | --- |
| Obtaining module | Decoding module | Setting module |

FIG. 11

## INTERNATIONAL SEARCH REPORT

| International application No. |
| --- |
| **PCT/CN2024/116309** |

| A. | CLASSIFICATION OF SUBJECT MATTER |
| --- | --- |

H04N 19/13(2014.01)i

According to International Patent Classification (IPC) or to both national classification and IPC

| B. | FIELDS SEARCHED |
| --- | --- |

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, CJFD, ENTXTC, ENTXT: 编码, 解码, 符号, 元素, 像素, 分组, 集合, 预设, 跳过, 替换, encod+, decod+, symbol+, element, pixel, group+, set, preset, skip+, replac+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023160470 A1 (HUAWEI TECHNOLOGIES CO., LTD.) 31 August 2023 (2023-08-31) description, paragraphs 248-334 | 1, 7, 11, 17, 21, 23-25, 27 |
| A | US 2011248872 A1 (RESEARCH IN MOTION LTD.) 13 October 2011 (2011-10-13) entire document | 1-27 |
| A | US 2022109843 A1 (LG ELECTRONICS INC.) 07 April 2022 (2022-04-07) entire document | 1-27 |
| A | CN 114339262 A (HUAWEI TECHNOLOGIES CO., LTD.) 12 April 2022 (2022-04-12) entire document | 1-27 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 October 2024** | **06 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| WO | 2023160470 | A1 | 31 August 2023 | None | | | |
| US | 2011248872 | A1 | 13 October 2011 | US | 8174414 | B2 | 08 May 2012 |
| | | | | US | 2012194363 | A1 | 02 August 2012 |
| | | | | US | 8730071 | B2 | 20 May 2014 |
| US | 2022109843 | A1 | 07 April 2022 | US | 11882285 | B2 | 23 January 2024 |
| | | | | KR | 20210084634 | A | 07 July 2021 |
| | | | | KR | 102647030 | B1 | 14 March 2024 |
| | | | | WO | 2020153512 | A1 | 30 July 2020 |
| | | | | EP | 3917143 | A1 | 01 December 2021 |
| | | | | EP | 3917143 | A4 | 07 September 2022 |
| CN | 114339262 | A | 12 April 2022 | None | | | |

Form PCT/ISA/210 (patent family annex) (July 2022)